# EUROPÄISCHE PATENTSCHRIFT

(11) **EP 3 121 637 B1**
(45) Veröffentlichungstag und Bekanntmachung des Hinweises auf die Patenterteilung: **01.09.2021**
(21) Anmeldenummer: 15178228.1
(22) Anmeldetag: 24.07.2015
(51) Int. Cl.: G02B 21/06, G02B 21/36, G02B 21/08, G06T 7/00

(54) **MIKROSKOP UND VERFAHREN ZUM ERZEUGEN EINES KOMBINIERTEN BILDES AUS MEHREREN EINZELBILDERN EINES OBJEKTS**
MICROSCOPE AND METHOD FOR GENERATING A COMBINED IMAGE FROM A PLURALITY OF INDIVIDUAL IMAGES OF AN OBJECT
MICROSCOPE ET PROCÊDÊ DE GÊNÊRATION D'UNE IMAGE COMBINÊE À PARTIR DE PLUSIEURS IMAGES INDIVIDUELLES D'UN OBJET

(43) Veröffentlichungstag der Anmeldung: 25.01.2017
(73) Patentinhaber: Leica Instruments (Singapore) Pte. Ltd., 608924 Singapore (SG)
(72) Erfinder: GRABHER, Günter, 6890 Lustenau (AT); PAULUS, Robert, 88145 Hergatz (DE); SCHNITZLER, Harald, 9450 Lüchingen (CH)
(74) Vertreter: Schaumburg und Partner Patentanwälte mbB

(56) Entgegenhaltungen:
- EP-A1- 1 865 353
- EP-A1- 2 818 095
- WO-A1-2014/036120
- WO-A2-2010/014244
- DE-B3-102007 006 584
- DE-C1- 3 527 426
- JP-A- 2009 134 100
- US-A- 6 088 612
- US-A1- 2003 086 145
- US-A1- 2012 086 795

## Beschreibung

Die Erfindung betrifft ein Mikroskop zum Erzeugen eines kombinierten Bildes aus mehreren Einzelbildern eines Objekts. Ferner betrifft die Erfindung ein Verfahren zum Erzeugen eines kombinierten Bildes aus mehreren Einzelbildern eines Objekts.

Bei der Aufnahme von Bildern ergeben sich in der Mikroskopie typischerweise Zonen mit Bildartefakten im Bild, die aufgrund einer Unter- bzw. Überbelichtung keine oder wenig Information beinhalten und deshalb keine existierenden Objektdetails wiedergeben. Diese Charakteristik ist von den Oberflächeneigenschaften, der Probentopografie, dem Probenmaterial und dem Beleuchtungsszenario abhängig.

Aus dem Stand der Technik sind sogenannte HDR ("High Dynamic Range")-Algorithmen bekannt, die für die Vergrößerung des Dynamikbereichs verwendet werden. Dabei werden mehrere Bilder mit unterschiedlichen Beleuchtungshelligkeiten und/oder unterschiedlichen Belichtungszeiten aufgenommen und dann zu einem Bild kombiniert. Diese Änderung der Belichtungszeiten führt allerdings zu Limitationen in der Bildhelligkeit. Diese Limitationen haben Einfluss auf die Bildwiederholrate, die vorzugsweise in der Anwendung hoch sein sollte. Insbesondere führt eine Erhöhung der Belichtungszeit für die Aufnahme der Bilder zu einer Änderung bzw. einem Abfall der Bildwiederholrate. Jedoch können bei der Verwendung der bekannten HDR-Algorithmen die vorher genannten Bildartefakte nicht ausreichend unterdrückt werden.

Das Dokument WO 2010/014244 A2 offenbart ein Verfahren und eine Vorrichtung für die mehrdirektionale SPIM ("selective plane illumination microscopy"). Eine Detektor-Fokalebene wird mit mindestens zwei gegenläufigen, koplanaren Lichtscheiben alternierend beleuchtet, und ein Bild eines in der Fokalebene positionierten Probenquerschnitts wird detektiert, während nur eine Lichtscheibe die Probe beleuchtet. Die Wellenfront der Beleuchtungsstrahlen kann mit Hilfe adaptiver Optik verformt werden unter Verwendung einer Rückkopplung von Licht, das durch die Probe transmittiert wird. Mehrere Bilder des Probenquerschnitts können zu verschiedenen Zeitpunkten und Probenpositionen und -orientierungen detektiert werden, um Mehrfachansicht-Bildstapel zu erzeugen, die unter Verwendung einer Bildfusion verarbeitet werden können, um eine rekonstruierte Bilddarstellung der Probe zu erzeugen. Zusätzlich kann die Ausbreitungsrichtung der alternierenden Lichtscheiben in der Fokalebene gedreht werden, während das Bild detektiert wird.

Das Dokument US 6,088,612 A offenbart eine Vorrichtung für gynäkologische Untersuchungen, insbesondere zur Untersuchung eines Gebärmuttermundes. Die Vorrichtung umfasst ein Kolposkop, eine Digitalkamera, eine Stroboskopeinheit, einen Computer und eine Beleuchtungseinrichtung. Die Digitalkamera nimmt ein erstes Bild und ein zweites Bild des Gebärmuttermundes auf. Die Stroboskopeinheit umfasst ein erstes und ein zweites Stroboskop und ist ausgebildet, den Gebärmuttermund bei der Aufnahme des ersten Bildes mithilfe des ersten Stroboskops von einer ersten Seite her zu beleuchten und bei der Aufnahme des zweiten Bildes mithilfe des zweiten Stroboskops von einer zweiten Seite her zu beleuchten. Bei der Aufnahme des ersten Bildes wird durch die Stroboskopeinheit ein erster Glanzbereich erzeugt und bei der Aufnahme des zweiten Bildes wird durch die Stroboskopeinheit ein zweiter Glanzbereich erzeugt. Der Computer erzeugt aus dem ersten und dem zweiten Bild ein glanzfreies zusammengesetztes Bild. Dazu vergleicht der Computer jeweils eine Intensität eines Pixels des ersten Bildes mit einer Intensität eines zugeordneten Pixels des zweiten Bildes für alle Pixel des ersten und des zweiten Bildes.

JP 2009 134100 A offenbart ein Mikroskop nach dem Oberbegriff des Anspruchs 1. Eine Beleuchtungseinrichtung des bekannten Mikroskops hat mehrere Lampen, die ringförmig um die optische Achse eines Objektivs angeordnet sind. Durch einzelnes Anschalten der Lampen wird somit ein mittels dem Objektiv zu beobachtenden Objekt aus unterschiedlichen Beleuchtungsrichtungen beleuchtet

EP 2 818 095 A1 offenbart ein Verfahren zum Betreiben einer zahnärztlichen Kamera. Bei dem bekannten Verfahren wird ein Zahn aufeinanderfolgend aus zwei unterschiedlichen Beleuchtungsrichtungen beleuchtet. Für jede dieser Beleuchtungsrichtungen wird ein Bild erzeugt. Diese beiden Bilder werden durch eine Bildverarbeitungseinheit verglichen, um eine Überbeleuchtung zu ermitteln. Zum Erzeugen der beiden Beleuchtungsrichtungen umfasst eine Beleuchtungseinheit der zahnärztlichen Kamera zwei seitlich der optischen Achse eines Objektivs angeordnete Lichtquellen.

EP 1 865 353 A1 offenbart eine Beleuchtungseinheit für ein Mikroskop, die ausgebildet ist, eine Probe mittels einer Vielzahl von zueinander versetzten Lichtblättern zu durchleuchten. Zum Erzeugen der Lichtblätter weist die Beleuchtungseinheit eine Mikrospiegelaktoreinheit (engl. digital mirror device, DMD) auf, die in dem Beleuchtungsstrahlengang des Mikroskops angeordnet ist.

US 2003/0086145 A1 offenbart eine Lichtmodulationsvorrichtung für ein Mikroskop. Die Lichtmodulationsvorrichtung dient zur Erzeugung eines Lichtmusters zum Beleuchten einer Probe. Zum Erzeugen des Lichtmusters ist eine Mikrospiegelaktoreinheit vorgesehen, die in dem Beleuchtungsstrahlengang des Mikroskops angeordnet ist.

US 2021/086795 A1 offenbart ein Mikroskop mit einer Apertur-Festblende, die zur optischen Achse des Mikroskops versetzt angeordnet ist. Durch die versetzte Anordnung der Apertur-Festblende wird an einem zu beobachtenden Objekt eine Lichteinfallsrichtung von ca. 45° erreicht. Das Mikroskop umfasst ferner eine drehbare Blendenscheibe, auf der in Umfangsrichtung mehrere Blendenöffnungen angeordnet sind. Durch Drehen der Blendenscheibe können der Apertur-Festblende verschiedene Blendenöffnungen nachgeschaltet werden. Durch Drehen der Blendenscheibe 8 wird die Lichteinfallsrichtung nicht verändert.

DE 35 27 426 C1 offenbart eine Beleuchtungseinrichtung für ein Mikroskop. Die Beleuchtungseinrichtung umfasst eine Aperturblende, die mittels einer Stellmutter verschoben werden kann, um einen Neigungswinkel eines Auflichtes einzustellen.

Ausgehend von dem bekannten Stand der Technik ist es Aufgabe der Erfindung, ein Mikroskop, das ein kombiniertes Bild aus mehreren Einzelbildern eines Objekts erzeugt, anzugeben, wobei das Mikroskop einen einfachen Aufbau hat und eine hohe Bildqualität des kombinierten Bildes ermöglicht.

Diese Aufgabe wird durch ein Mikroskop mit den Merkmalen des Anspruchs 1 und ein Verfahren mit den Merkmalen des Anspruchs 12 gelöst. Vorteilhafte Weiterbildungen sind in den abhängigen Ansprüchen angegeben.

Durch ein Mikroskop mit den Merkmalen des Anspruchs 1 wird ein einfacher Aufbau und eine hohe Bildqualität des kombinierten Bildes ermöglicht, da insbesondere das Objekt aus mindestens zwei unterschiedlichen Beleuchtungsrichtungen beleuchtet wird. Ferner werden mehrere Einzelbilder des aus den mindestens zwei unterschiedlichen Beleuchtungsrichtungen beleuchteten Objekts aufgenommen. Ferner wird das kombinierte Bild durch Kombinieren der Einzelbilder erzeugt. Dabei wird beim Kombinieren der Einzelbilder ein Kompensieren eines Bildinformationsverlustes, der mit einem Bildartefakt eines der Einzelbilder verbunden ist, unter Verwendung einer Bildinformation mindestens eines anderen der Einzelbilder im kombinierten Bild durchgeführt. Somit kann der aufgrund eines Bildartefaktes auftretende Bildinformationsverlust während der Bilderzeugung vermieden werden. Dies ermöglicht den einfachen Aufbau und die hohe Bildqualität des kombinierten Bildes, das mehr Informationsgehalt besitzt als jedes der Einzelbilder. Dabei können die für die Bildkombination verwendeten Einzelbilder sowohl mit Mikroskopen mit

Auflichtbeleuchtungseinrichtung als auch mit Mikroskopen mit

Durchlichtbeleuchtungseinrichtungen erstellt werden.

Ein erfindungsgemäßes Mikroskop erzeugt ein kombiniertes Bild aus mehreren Einzelbildern eines Objekts. Dazu beleuchtet es mit mindestens einer Beleuchtungseinrichtung das Objekt aus mindestens zwei unterschiedlichen Beleuchtungsrichtungen. Eine Bildaufnahmeeinheit nimmt mehrere Einzelbilder des aus den mindestens zwei unterschiedlichen Beleuchtungsrichtungen beleuchteten Objekts auf, kombiniert mit einer Bildkombinationseinheit die Einzelbilder und erzeugt dadurch das kombinierte Bild. Die Bildkombinationseinheit ist dazu ausgebildet, bei der Kombination der Einzelbilder einen Bildinformationsverlust, der mit einem Bildartefakt eines der Einzelbilder verbunden ist, unter Verwendung einer Bildinformation mindestens eines anderen der Einzelbilder im kombinierten Bild zu kompensieren.

Vorzugsweise ist die Bildkombinationseinheit dazu ausgebildet, ein Bildartefakt eines der Einzelbilder aus einer automatisierten Auswertung der Einzelbilder zu ermitteln.

Erfindungsgemäß umfasst das Mikroskop eine einzige Beleuchtungseinrichtung zum Beleuchten des Objekts aus einer ersten Beleuchtungsrichtung und einer zweiten Beleuchtungsrichtung der mindestens zwei unterschiedlichen Beleuchtungsrichtungen. Somit können die mindestens zwei unterschiedlichen Beleuchtungsrichtungen unter Verwendung einer Beleuchtungseinrichtung relativ flexibel bereitgestellt werden.

Beispielsweise umfasst das Bildartefakt einen Glanzbereich, einen unterbelichteten Bereich und/oder einen kontrastarmen Bereich. Diese Bildbereiche können einzelne Pixel umfassen, betreffen jedoch üblicherweise mehrere zusammenhängende Pixel. Dabei entspricht der Glanzbereich beispielsweise einem überbelichteten Bereich, der aufgrund einer Reflexion an einer glänzenden Oberfläche des Objekts entsteht. Beispielsweise ist das Objekt ein 3D-Objekt mit einer glänzenden, gewölbten Oberfläche, wodurch sowohl Glanzbereiche und unterbelichtete Bereiche entstehen können. Die Bildkombinationseinheit ist dazu ausgebildet, mindestens einen solchen Bildartefakt-Bereich zu ermitteln, indem sie einen Vergleich von Intensitätswerten der einzelnen Pixel der Einzelbilder mit einem oberen Schwellwert und/oder einem unteren vorgegebenen Schwellwert vornimmt und/oder eine Kontrastbewertung des Bildartefakt-Bereiches vornimmt. Hierbei ist zu beachten, dass eine Kontrastbewertung nur in zusammenhängenden Bereichen mit mehreren Pixeln vorgenommen werden kann. Durch die Untersuchung einzelner Pixel kann keine Aussage über den Kontrast getroffen werden.

So kann beispielweise durch kombinierte Anwendung eines oberen Schwellwertes und eines unteren Schwellwertes ein Toleranzbereich für die zulässige Intensität der ausgewerteten Pixel der Einzelbilder definiert werden. Dann werden die Pixel, deren Intensitätswerte innerhalb dieses Toleranzbereiches liegen, für die Erstellung des kombinierten Bildes verwendet.

Bei der Ermittlung eines Bildartefakt-Bereiches entspricht ein Glanzbereich jeweils mindestens einem überbelichteten Bereich des jeweiligen Einzelbildes, wobei der Glanzbereich solche Pixel umfasst, deren Intensität größer als ein vorbestimmter Schwellwert ist. Somit umfasst ein Glanzbereiche überbelichtete Pixel, die mit einem Verlust von Bildinformation verbunden sind.

Entsprechend umfasst ein unterbelichteter Bereich solche Pixel, deren Intensität kleiner als ein vorbestimmter Schwellwert ist. Diese sind auch mit einem Verlust von Bildinformation verbunden.

Ein kontrastarmer Bereich umfasst solche Pixel, deren Kontrastwert kleiner als ein vorbestimmter Kontrastwert ist. Auch hiermit ist ein Verlust von Bildinformation verbunden.

Die Bildaufnahmeeinheit ist dazu ausgebildet, die verschiedenen Einzelbilder jeweils mit einem Bildartefakt, das in Form eines Glanzbereichs vorliegt, aufzunehmen und die jeweiligen Glanzbereiche den mindestens zwei unterschiedlichen Beleuchtungsrichtungen zuzuordnen. Somit kann eine Sequenz von Einzelbildern mit jeweils unterschiedlichen Glanzbereichen für die Bilderzeugung bereitgestellt werden.

Dabei entsprechen die den mindestens zwei unterschiedlichen Beleuchtungsrichtungen zugeordneten Glanzbereiche jeweils einem überbelichteten Bereich des jeweiligen Einzelbildes. Somit entsprechen die unterschiedlichen Glanzbereiche beispielsweise verschiedenen Reflexionen an der glänzenden, gewölbten Oberfläche des aus den mindestens zwei unterschiedlichen Beleuchtungsrichtungen beleuchteten 3D-Objekts.

Die Bildkombinationseinheit ist dazu ausgebildet, einen Glanzbereich als Artefakt eines ausgewählten Einzelbilds zu bestimmen und so den bestimmten Glanzbereich des ausgewählten Einzelbildes durch eine Bildinformation aus einem entsprechenden, nicht überbelichteten Bereich mindestens eines von dem ausgewählten Einzelbild verschiedenen Einzelbildes zu ersetzen. Hierzu werden beispielsweise die dem zu korrigierenden Glanzbereich entsprechenden Pixel der anderen Einzelbilder verrechnet, um dadurch zu einem Ersatzwert für jedes zu ersetzende Pixel zu gelangen. Alternativ kann auch durch eine Auswertung eines mehrere Pixel umfassenden Bereichs, beispielsweise eine Kontrastauswertung, der anderen Bilder der jeweils beste, beispielsweise der kontraststärkste, Bereich ermittelt werden. Andere Auswertungen sind selbstverständlich denkbar und vom Erfindungsgedanken umfasst. Somit kann ein sogenannter "Pick and replace"(Suche und Ersetze)-Algorithmus für die Bildkombination realisiert werden indem dass jeweils der Werte des jeweils ermittelten Ersatzpixel in das Bildartefakt, hier also in den Glanzbereich, eingesetzt wird. Mit Hilfe dieses Algorithmus kann die Bildqualität im kombinierten Bild erhöht werden.

Vorzugsweise umfasst der zum Korrigieren der Bildartefakte herangezogene nicht überbelichtete Bereich solche Pixel, deren Intensität maximal so groß wie ein vorbestimmter Schwellwert ist. Somit können geeignete Pixelintensitätswerte als Bildinformation für den zu ersetzenden Glanzbereich im "Pick and replace"-Algorithmus verwendet werden.

Optional ist die Bildkombinationseinheit ebenso dazu ausgebildet, einen unterbelichteten Bereich eines ausgewählten Einzelbildes zu bestimmen und den bestimmten unterbelichteten Bereich des ausgewählten Einzelbildes durch eine Bildinformation aus einem entsprechenden, nicht unterbelichteten Bereich mindestens eines von dem ausgewählten Einzelbild verschiedenen Einzelbildes zu ersetzen. Dabei umfasst der nicht unterbelichtete Bereich beispielsweise Pixel, deren Intensität mindestens so groß wie ein vorbestimmter Schwellwert ist.

Die Beleuchtungseinrichtung ist dazu ausgebildet, den Azimutwinkel und den Elevationswinkel der mindestens zwei unterschiedlichen Beleuchtungsrichtungen einzustellen. Somit können die mindestens zwei unterschiedlichen Beleuchtungsrichtungen für die Beleuchtung des Objekts flexibel eingestellt werden.

Die Bildaufnahmeeinheit ist dazu ausgebildet, die Einzelbilder als eine Sequenz von vier zeitlich aufeinanderfolgenden Einzelbildern aufzunehmen. Dabei umfassen die vier zeitlich aufeinanderfolgenden Einzelbilder einen ersten bis vierten Glanzbereich. Ferner sind der erste bis vierte Glanzbereich einer ersten bis vierten Beleuchtungsrichtung zugeordnet. Beispielsweise haben die erste bis vierte Beleuchtungsrichtung einen Azimutwinkel von 0°, 90, 180° bzw. 270° und einen gleichen Elevationswinkel. Somit kann eine spezielle Sequenz von vier Einzelbildern für die Bilderzeugung bereitgestellt werden. Dabei entsprechen die Glanzbereiche beispielsweise einer Beleuchtung des Objekts aus Norden, Osten, Süden oder Westen, und zwar immer unter demselben Elevationswinkel.

Weiterhin ist die Beleuchtungseinrichtung dazu ausgebildet, die mindestens zwei unterschiedlichen Beleuchtungsrichtungen unter Verwendung einer verstellbaren Aperturblende im Beleuchtungsstrahlengang des Mikroskops zu erzeugen. Somit kann eine noch flexiblere Erzeugung der mindestens zwei unterschiedlichen Beleuchtungsrichtungen für die Beleuchtung des Objekts erreicht werden. Vorzugsweise ist das Mikroskop durch eine Steuerung zum Steuern der Beleuchtungseinrichtung gekennzeichnet. Dabei ist die Steuerung derart ausgebildet, dass zwischen einer ersten Beleuchtungsrichtung und einer zweiten Beleuchtungsrichtung der mindestens zwei unterschiedlichen Beleuchtungsrichtungen umgeschaltet wird. Somit kann das Umschalten auf die jeweils aktuelle Beleuchtungsrichtung kontrolliert durchgeführt werden.

Das Mikroskop ist durch eine Steuerung gekennzeichnet, welche die Bildaufnahmeeinheit steuert. Die Steuerung ist dazu ausgebildet, die Einzelbilder mit einer konstanten Bildwiederholrate aufzunehmen und somit ein Live-Streaming von mehreren kombinierten Bildern zu erzeugen. Somit kann ein Live-Stream bzw. eine Quasi-Echtzeitübertragung von hochqualitativen, synthetischen Bildern realisiert werden.

Gemäß einem Ausführungsbeispiel der vorliegenden Erfindung wird ein Verfahren zum Erzeugen eines kombinierten Bildes aus mehreren Einzelbildern eines Objekts bereitgestellt. Das Verfahren umfasst ein Beleuchten des Objekts aus mindestens zwei unterschiedlichen Beleuchtungsrichtungen, ein Aufnehmen von mehreren Einzelbildern des aus den mindestens zwei unterschiedlichen Beleuchtungsrichtungen beleuchteten Objekts und ein Erzeugen des kombinierten Bildes durch Kombinieren der Einzelbilder. Dabei wird beim Kombinieren der Einzelbilder ein Bildinformationsverlust, der mit einem Bildartefakt eines der Einzelbilder verbunden ist, unter Verwendung einer Bildinformation mindestens eines anderen der Einzelbilder im kombinierten Bild kompensiert.

Ausführungsvariante der Erfindung haben den Vorteil, dass durch die Verwendung von unterschiedlichen Beleuchtungsrichtungen ein deutlicher Bildinformationsgewinn erzielt werden kann. Dieser Bildinformationsgewinn ist dadurch gekennzeichnet, dass im Vergleich zu den Einzelbildern mehr Objektdetails im kombinierten Bild sichtbar werden. Dabei ist insbesondere anzumerken, dass der Bildinformationsgewinn beispielsweise unter Verwendung einer gleichen Fokuseinstellung für alle Einzelbilder einer Sequenz erzielt werden kann, ohne dass ein sogenannter "Z-Stacking-Algorithmus" angewendet werden muss, der Bildaufnahmen mit verschiedenen Foukuseinstellungen erfordert.

So wird gemäß dem erfindungsgemäßen Verfahren ein Glanzbereich, ein unterbelichteter Bereich und/oder ein kontrastarmer Bereich als ein Bildartefakt-Bereich ermittelt, indem die Intensitätswerte der einzelnen Pixel der Einzelbilder mit einem oberen Schwellwert und/oder einem unteren vorgegebenen Schwellwert verglichen werden und/oder eine Kontrastbewertung der Bildbereiche vorgenommen wird.

In einer Ausgestaltung des Verfahrens werden die verschiedenen Einzelbilder jeweils mit einem Glanzbereich aufgenommen und die jeweiligen Glanzbereiche den mindestens zwei unterschiedlichen Beleuchtungsrichtungen zugeordnet, wobei die den mindestens zwei unterschiedlichen Beleuchtungsrichtungen zugeordneten Glanzbereiche jeweils einem überbelichteten Bereich des jeweiligen Einzelbildes entsprechen.

Die Glanzbereiche werden beispielsweise bestimmt, indem diejenigen Pixel ermittelt werden, deren Intensität größer als ein vorbestimmter Schwellwert ist.

Zum Kombinieren der Einzelbilder wird ein Glanzbereich eines ausgewählten Einzelbildes bestimmt und durch eine Bildinformation ersetzt, die aus einem entsprechenden, nicht überbelichteten Bereich mindestens eines von dem ausgewählten Einzelbild verschiedenen Einzelbildes gewonnen wird.

Dies kann dergestalt erfolgen, dass der nicht überbelichtete Bereich solche Pixel umfasst, deren Intensität maximal so groß wie ein vorbestimmter Schwellwert ist.

Zum Kombinieren der Einzelbilder wird ein unterbelichteter Bereich eines ausgewählten Einzelbildes bestimmt und der so bestimmte unterbelichtete Bereich des ausgewählten Einzelbildes durch eine Bildinformation ersetzt, die aus einem entsprechenden, nicht unterbelichteten Bereich mindestens eines von dem ausgewählten Einzelbild verschiedenen Einzelbildes gewonnen wird. Dabei umfasst der nicht unterbelichtete Bereich solche Pixel, deren Intensität mindestens so groß wie ein vorbestimmter Schwellwert ist.

Bei dem Verfahren wird der Azimutwinkel β und der Elevationswinkel α der mindestens zwei unterschiedlichen Beleuchtungsrichtungen auf bestimmte Werte eingestellt.

Mit Vorteil wird dann eine Sequenz von mehreren zeitlich aufeinander folgenden Einzelbildern aufgenommen, wobei die mehreren zeitlich aufeinander folgenden Einzelbilder verschiedene Bildartefakte umfassen. Dabei sind die verschiedenen Bildartefakte verschiedenen Beleuchtungsrichtungen zugeordnet, welche mit unterschiedlichen Azimutwinkeln β und/oder unterschiedlichen Elevationswinkeln α der Beleuchtungsrichtungen erzielt werden.

Bei dem Verfahren werden mindestens zwei unterschiedliche Beleuchtungsrichtungen unter Verwendung einer verstellbaren Aperturblende im Beleuchtungsstrahlengang des Mikroskops erzeugt.

Eine andere Ausgestaltung des Verfahrens zeichnet sich durch ein Steuern einer Beleuchtungseinrichtung aus, wobei zwischen einer ersten Beleuchtungsrichtung und einer zweiten Beleuchtungsrichtung der mindestens zwei unterschiedlichen Beleuchtungsrichtungen umgeschaltet wird.

Hierbei wird das Steuern der Bildaufnahmeeinheit derart ausgeführt, dass die Einzelbilder mit einer konstanten Bildwiederholrate fᵣ aufgenommen werden und somit ein Life-Streaming von mehreren kombinierten Bildern erzeugt wird.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1a: eine schematische, perspektivische Darstellung eines digitalen Mikroskops gemäß einem Ausführungsbeispiel der vorliegenden Erfindung;
- Figur 1b: eine vergrößerte Darstellung einer Beleuchtungseinrichtung des in Figur 1a gezeigten digitalen Mikroskops;
- Figur 1c: eine schematische, perspektivische Darstellung eines digitalen Mikroskops gemäß einem Ausführungsbeispiel der vorliegenden Erfindung;
- Figuren 2a bis 2d: eine beispielhafte erste Sequenz von vier zeitlich aufeinanderfolgenden Einzelbildern eines 3D-Objekts mit einem ersten bis vierten Glanzbereich;
- Figur 2e: eine basierend auf der in Figur 2a bis 2d gezeigten ersten Sequenz von Einzelbildern erzeugtes, beispielhaftes kombiniertes Bild;
- Figuren 3a bis 3d: eine beispielhafte zweite Sequenz von vier zeitlich aufeinander folgenden Einzelbildern eines 3D-Objekts mit einem ersten bis vierten Glanzbereich und einem unterbelichteten Bereich;
- Figur 3e: ein basierend auf der in Figur 3a bis 3d gezeigten zweiten Sequenz von Einzelbildern erzeugtes, beispielhaftes kombiniertes Bild;
- Figuren 4a bis 4d: eine beispielhafte dritte Sequenz von vier zeitlich aufeinander folgenden Einzelbildern eines 3D-Objekts mit einem ersten bis vierten Glanzbereich und einem unterbelichteten Bereich;
- Figur 4e: ein basierend auf der in Figur 4a bis 4d gezeigten dritten Sequenz von Einzelbildern erzeugtes, beispielhaftes kombiniertes Bild;
- Figur 5a: ein Blockdiagramm von Komponenten des in Figur 1a gezeigten digitalen Mikroskops mit einer Steuerung und einer Beleuchtungseinrichtung;
- Figur 5b: ein Blockdiagramm von Komponenten des in Figur 1c gezeigten digitalen Mikroskops mit einer Steuerung, einer ersten Beleuchtungseinrichtung und einer zweiten Beleuchtungseinrichtung;
- Figur 5c: ein Blockdiagramm von Komponenten des in Figur 1a gezeigten digitalen Mikroskops mit einer Steuerung, einer Bildaufnahmeeinheit und einer Bildkombinationseinheit;
- Figur 6: ein Flussdiagramm eines mit dem in Figur 1a gezeigten digitalen Mikroskop durchführbaren Verfahrens gemäß einem Ausführungsbeispiel der vorliegenden Erfindung;.
- Figur 7: eine Schemadarstellung des Kombinationsprinzips zur Erzeugung eines kombinierten Bildes

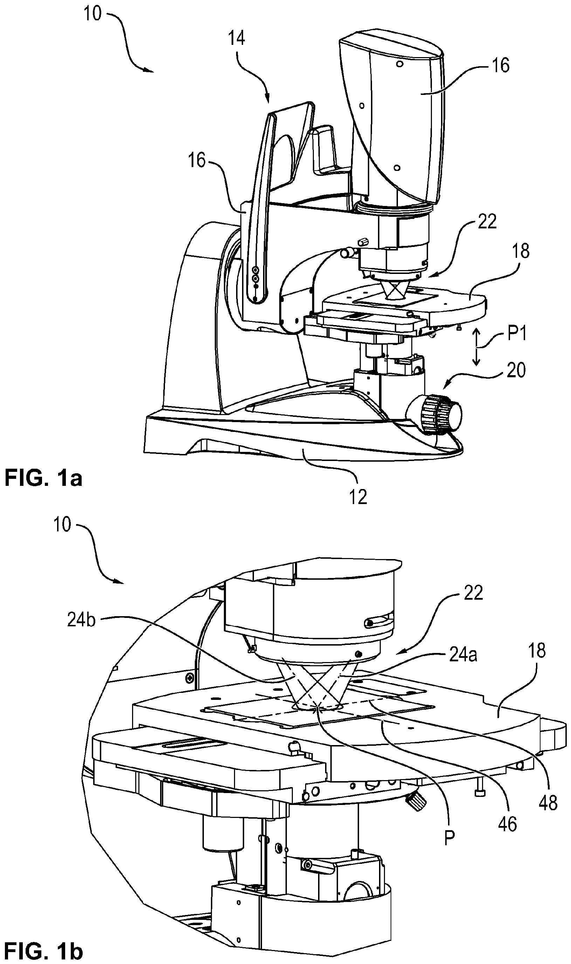

Figur 1a zeigt eine schematische, perspektivische Darstellung eines digitalen Mikroskops 10 gemäß einem Ausführungsbeispiel der vorliegenden Erfindung. Das in Figur 1a gezeigte, digitale Mikroskop 10 umfasst einen stationären Stativgrundkörper 12 und eine relativ zu diesem verschwenkbare Schwenkeinheit 14.

Die Schwenkeinheit 14 umfasst eine Bildaufnahmeeinheit, ein Objektivsystem und ein Zoomsystem. Diese Komponenten sind in Figur 1a nicht sichtbar, da diese von dem Gehäuse 16 der Schwenkeinheit 14 verdeckt sind.

Wie in Figur 1a gezeigt, ist an dem Stativgrundkörper 12 ein Objekttisch 18 angeordnet, auf den das zu untersuchende 3D-Objekt aufgebracht wird. Dieser Objekttisch 18 kann mit Hilfe von Stellrädern 20 relativ zum Stativgrundkörper 12 in Richtung des Doppelpfeiles P1 verstellt werden, wodurch eine Fokussierung des zu untersuchenden 3D-Objekts möglich ist.

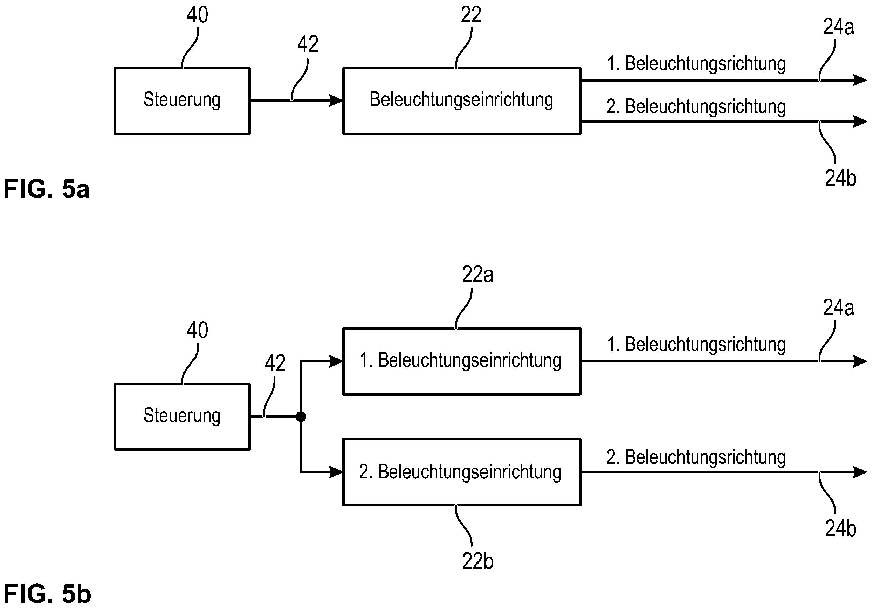

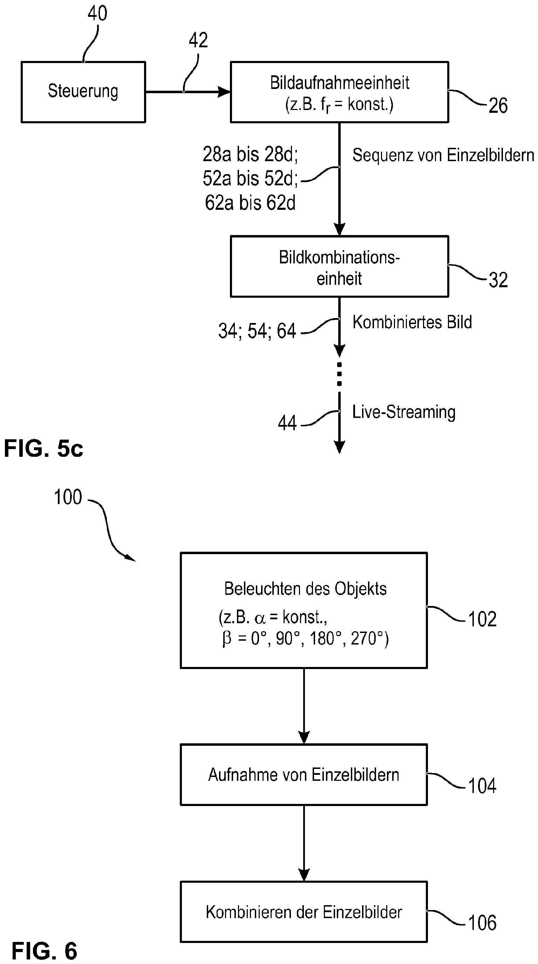

Ferner ist in Figur 1a eine Beleuchtungseinrichtung 22 des digitalen Mikroskops 10 schematisch dargestellt. Nähere Einzelheiten der Beleuchtungseinrichtung 22 werden im Folgenden noch anhand von Figur 1b beschrieben. Das in Figur 1a gezeigte digitale Mikroskop 10 umfasst ferner eine mit der Bildaufnahmeeinheit gekoppelte Bildkombinationseinheit. Ferner umfasst das digitale Mikroskop 10 eine Steuerung, die mit der Beleuchtungseinrichtung und/oder der Bildaufnahmeeinheit gekoppelt ist. Diese Komponenten 40, 22 bzw. 26 werden anhand von Figur 5a und 5c noch näher beschrieben. Die Bildkombinationseinheit und die Steuerung sind in Figur 1a nicht dargestellt. Diese Komponenten 32 bzw. 40 sind beispielsweise interne Komponenten oder externe Komponenten des in Figur 1a gezeigten digitalen Mikroskops 10.

Figur 1b zeigt eine vergrößerte Darstellung der Beleuchtungseinrichtung 22 des in Figur 1a gezeigten digitalen Mikroskops 10. Die Beleuchtungseinrichtung 22 dient zur Beleuchtung des Objekts aus mindestens zwei unterschiedlichen

Beleuchtungsrichtungen 24a, 24b. Das in der Objektebene liegende, zu untersuchende 3D-Objekt ist in Figur 1a und 1b nicht dargestellt. Wie in Figur 1b gezeigt, umfasst die Objektebene eine erste Achse 46, z.B. die X-Achse, und eine zweite Achse 48, z.B. die Y-Achse. Die mit Hilfe der Beleuchtungseinrichtung 22 erzeugbaren unterschiedlichen Beleuchtungsrichtungen 24a, 24b können jeweils relativ zu dem durch die erste und zweite Achse 46, 48 aufgespannte Koordinatensystem definiert werden. Insbesondere umfassen die mindestens zwei unterschiedlichen Beleuchtungsrichtungen 24a, 24b eine erste Beleuchtungsrichtung 24a und eine zweite Beleuchtungsrichtung 24b, deren Azimutwinkel und/oder Elevationswinkel relativ zu diesem Koordinatensystem einstellbar ist bzw. sind. Dabei ist der Azimutwinkel beispielsweise ein in der Objektebene liegender Winkel relativ zur ersten Achse 46. Ferner ist der Elevationswinkel beispielsweise ein Winkel relativ zu dem durch die erste und zweite Achse 46, 48 aufgespannte Koordinatensystem. Wie in Figur 1b gezeigt, überschneiden sich die erste und zweite Beleuchtungsrichtung 24a, 24b in einem in der Objektebene liegenden gemeinsamen Punkt P. Ferner stellen die erste und die zweite Beleuchtungsrichtung 24a, 24b jeweils eine einem Lichtkegel zugeordnete Vorzugsrichtung dar. Die von der Beleuchtungseinrichtung 22 ausgehenden Lichtkegel mit der ersten und zweiten Beleuchtungsrichtung 24a, 24b überdecken sich im Wesentlichen in der Objektebene. Somit kann das in der Objektebene liegende Objekt vollständig beleuchtet werden.

Gemäß Figur 1b entsprechen die erste und zweite Beleuchtungsrichtung 24a, 24b jeweils einer Beleuchtung schräg von oben, d.h. unter einem bestimmten Winkel relativ zur optischen Achse des digitalen Mikroskops 10, auf das Objekt. Ferner sind gemäß Figur 1b die Elevationswinkel der ersten und zweiten Beleuchtungsrichtung 24a, 24b gleich groß, während die Azimutwinkel der ersten und zweiten Beleuchtungsrichtung 24a, 24b voneinander verschieden sind. Dadurch können Glanzbereiche an verschiedenen Stellen auf der Oberfläche des Objekts erzeugt werden. Die Bildaufnahme erfolgt gemäß Figur 1b jedoch immer aus derselben Beobachtungsrichtung.

Die in Figur 1b gezeigte Beleuchtungseinrichtung 22 umfasst insbesondere ein Ringlicht mit mehreren in dem Ringlicht integrierten LEDs. Die Lichtkegel mit ihrer jeweiligen Vorzugsrichtung können durch individuelles Ansteuern einzelner LEDs oder durch individuelles Ansteuern von Segmenten von LEDs erzeugt werden. Dabei umfasst jedes Segment mehrere LEDs des Ringlichts. Gemäß Figur 1b wird der Lichtkegel mit der ersten Beleuchtungsrichtung 24a durch Ansteuern einer ersten LED oder eines ersten Segments von LEDs zu einem ersten Zeitpunkt erzeugt, während der Lichtkegel mit der zweiten Beleuchtungsrichtung 24b durch Ansteuern einer zweiten LED oder eines zweiten Segments von LEDs zu einem zweiten, späteren Zeitpunkt erzeugt wird. Somit können die mindestens zwei unterschiedlichen Beleuchtungsrichtungen 24a, 24b sequentiell bereitgestellt werden. Die jeweilige Beleuchtungsrichtung 24a, 24b entspricht einer Richtung entlang einer Verbindungslinie von der jeweils angesteuerten Lichtquelle zu dem Objekt.

Alternativ dazu können die mindestens zwei unterschiedlichen Beleuchtungsrichtungen 24a, 24b auch von mehreren LEDs oder mehreren Segmenten von LEDs gleichzeitig bereitgestellt werden.

Bei anderen Ausführungsbeispielen dient die Beleuchtungseinrichtung 22 anstatt zur Erzeugung der Ringlichtbeleuchtung zur Erzeugung einer Bogenbeleuchtung (nicht gezeichnet). Alternativ oder zusätzlich kann auch eine variabel anordenbare Schwanenhalsbeleuchtungsvorrichtung an einem flexiblen Schwanenhalsträger vorgesehen sein (nicht gezeichnet) In diesen Fällen sind sowohl der Azimutwinkel als auch der Elevationswinkel der Beleuchtungsrichtung einstellbar.

Optional ist die Beleuchtungseinrichtung 22 derart ausgebildet, dass die mindestens zwei unterschiedlichen Beleuchtungsrichtungen 24a, 24b unter Verwendung einer verstellbaren Aperturblende im Beleuchtungsstrahlengang des Mikroskops 10 erzeugt werden. Dies ermöglicht eine noch flexiblere Beleuchtung des Objekts.

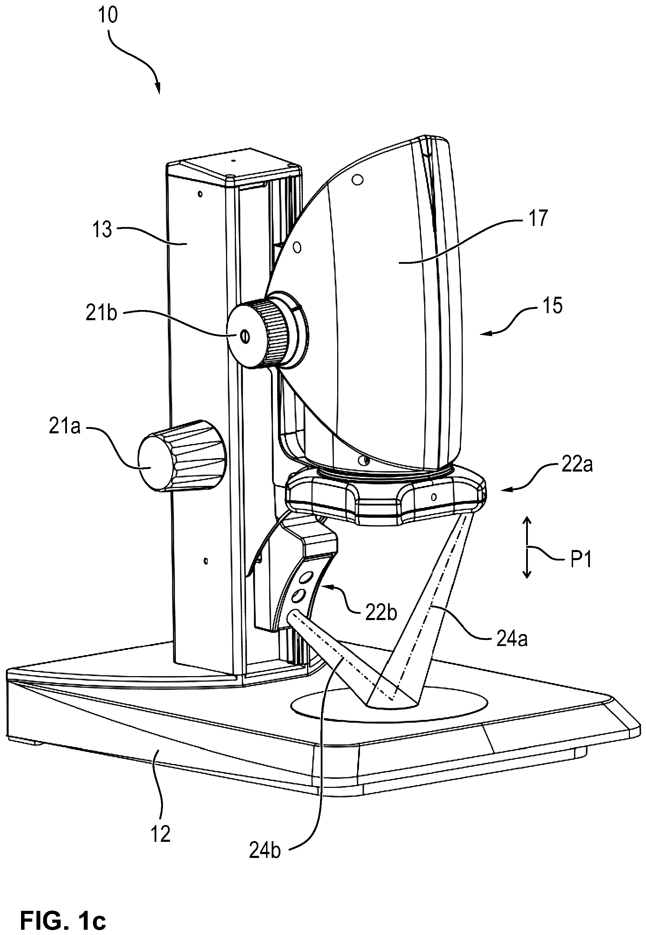

Figur 1c zeigt eine schematische, perspektivische Darstellung eines digitalen Mikroskops 10 gemäß einem Ausführungsbeispiel der vorliegenden Erfindung. Das in Figur 1c gezeigte, digitale Mikroskop 10 umfasst einen stationären Stativgrundkörper 12, eine senkrecht zu dem Stativgrundkörper 12 angeordnete Stativsäule 13 und einen relativ zu der Stativsäule 13 verschiebbaren Tragarm 15.

Der Tragarm 15 umfasst eine Zoomoptik und eine Bildaufnahmeeinheit, wie beispielsweise einen Kamerachip. Diese Komponenten sind in Figur 1c nicht sichtbar, da diese von dem Gehäuse 17 des Tragarms 15 verdeckt sind.

Wie in Figur 1c gezeigt, befindet sich auf dem Stativgrundkörper 12 eine Objektebene, in die das zu untersuchende 3D-Objekt gebracht wird. Der Tragarm 15 kann mit Hilfe von Stellrädern 21a, 21b relativ zum Stativgrundkörper 12 in Richtung des Doppelpfeiles P1 verstellt werden, wodurch eine Fokussierung des zu untersuchenden 3D-Objekts möglich ist.

Ferner sind in Figur 1c eine erste und eine zweite Beleuchtungseinrichtung 22a, 22b des digitalen Mikroskops 10 schematisch dargestellt. Das in Figur 1c gezeigte digitale Mikroskop 10 umfasst ferner eine mit der Bildaufnahmeeinheit gekoppelte Bildkombinationseinheit. Ferner umfasst das digitale Mikroskop 10 eine Steuerung, die mit der ersten und zweiten Beleuchtungseinrichtung und/oder der Bildaufnahmeeinheit gekoppelt ist. Diese Komponenten 40, 22a, 22b bzw. 26 werden anhand von Figur 5b und 5c noch näher beschrieben. Die Bildkombinationseinheit und die Steuerung sind in Figur 1c nicht dargestellt.

Bezugnehmend auf Figur 1c dient die erste Beleuchtungseinrichtung 22a zur Beleuchtung des Objekts aus einer ersten Beleuchtungsrichtung 24a der mindestens zwei unterschiedlichen Beleuchtungsrichtungen 24a, 24b, während die zweite Beleuchtungseinrichtung 22b zur Beleuchtung des Objekts aus einer zweiten Beleuchtungsrichtung 24b der mindestens zwei unterschiedlichen Beleuchtungsrichtungen 24a, 24b dient. Das in der Objektebene liegende, zu untersuchende 3D-Objekt ist in Figur 1c nicht dargestellt. Die in Figur 1c gezeigte erste und zweite Beleuchtungsrichtung 24a, 24b entsprechen im Wesentlichen der in Figur 1b gezeigten ersten und zweiten Beleuchtungsrichtung 24a, 24b. Es ist allerdings ein Vorteil bei dem in Figur 1c gezeigten Ausführungsbeispiel, dass die Elevations- und Azimutwinkel der ersten Beleuchtungsrichtung 24a und der zweiten Beleuchtungsrichtung, 24b voneinander verschieden einstellbar sind.

Bei dem Ausführungsbeispiel von Figur 1c umfasst die erste Beleuchtungseinrichtung 22a vier LEDs, die in gleichen Winkelabständen um die optische Achse des digitalen Mikroskops 10 herum angeordnet sind. Ferner umfasst die zweite Beleuchtungseinrichtung 22b drei LEDs, die auf unterschiedlichen Höhen übereinander angeordnet sind. Somit kann das Objekt mit Hilfe der ersten Beleuchtungseinrichtung 22a aus vier Beleuchtungsrichtungen mit unterschiedlichen Azimutwinkeln beleuchtet werden. Ferner kann das Objekt mit Hilfe der zweiten Beleuchtungseinrichtung 22b aus drei Beleuchtungsrichtungen mit unterschiedlichen Elevationswinkeln beleuchtet werden.

Wie in Figur 1c gezeigt, ist an der senkrechten Stativsäule 13 ein nach vorne in Richtung des Benutzers ragender Tragarm 15 angesetzt, an dem die erste

Beleuchtungseinrichtung 22a angebracht ist. Die erste Beleuchtungseinrichtung 22a weist vier einzelne LEDs auf, die separat oder in Gruppen schaltbar sind, und ermöglicht so eine Beleuchtung aus vier Beleuchtungsrichtungen. Auf die erste Beleuchtungseinrichtung 22a ist von oben die Zoomoptik aufgesetzt, in welche am oberen Ende der Kamerachip integriert ist.

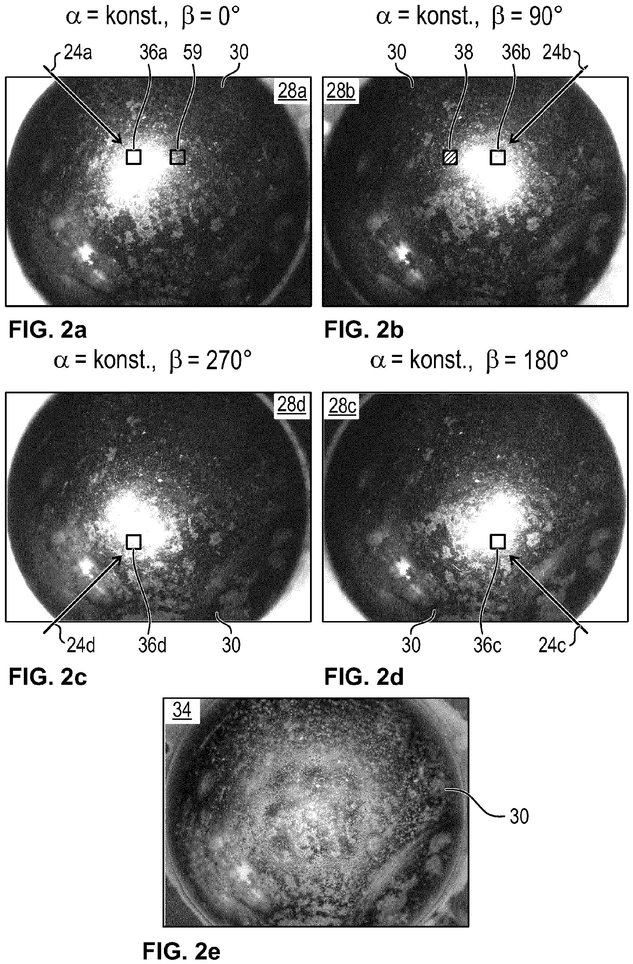

Figuren 2a bis 2d zeigen eine beispielhafte erste Sequenz von vier zeitlich aufeinanderfolgenden Einzelbildern 28a bis 28d eines 3D-Objekts 30 mit einem ersten bis vierten Glanzbereich 36a bis 36d. Das in Figur 2a bis 2d gezeigte 3D-Objekt 30 ist insbesondere eine Metallkugel mit einer unregelmäßigen, glänzenden Oberfläche. Die unregelmäßige Oberfläche entsteht beispielsweise durch Korrosionsstellen auf der Metallkugel. An der Oberfläche der in Figur 2a bis 2d gezeigten Metallkugel gilt das Reflexionsgesetz, d.h. Licht der Beleuchtungseinrichtung 22 wird an dieser Oberfläche winkelerhaltend reflektiert. Somit entstehen an der Oberfläche der Metallkugel Reflexionen. Diese Reflexionen führen zu Glanzbereichen bzw. überbelichteten Bereichen in den mit Hilfe der Bildaufnahmeeinheit 26 aufgenommenen Einzelbildern 28a bis 28d der ersten Sequenz.

Vorzugsweise handelt es sich bei dem Objekt 30 um eine Lagerkugel eines Kugellagers, d.h. eines Wälzlagers.

Figur 2a zeigt ein aufgenommenes erstes Einzelbild 28a des Objekts 30 mit einem ersten Glanzbereich 36a. Der erste Glanzbereich 36a des ersten Einzelbildes 28a ist einer ersten Beleuchtungsrichtung 24a zugeordnet. Dabei hat die erste Beleuchtungsrichtung 24a einen Azimutwinkel von 0° (ß = 0°). Dieser Winkel entspricht beispielsweise der erste Achse 46 des in Figur 1b gezeigten Koordinatensystems. Ferner hat die erste Beleuchtungsrichtung 24a einen innerhalb des Winkelbereichs von 0° bis 90° beliebig fest vorgegebenen Elevationswinkel (α = konstant).

Ferner umfasst das in Figur 2a gezeigte erste Einzelbild 28a auch einen unterbelichteten Bereich 59. Wie in Figur 2a gezeigt, ist der unterbelichtete Bereich 59 seitlich neben dem ersten Glanzbereich 36a angeordnet. Der unterbelichtete Bereich 59 entspricht insbesondere einem dunklen Bereich ohne erkennbare Objektdetails.

Figur 2b zeigt ein aufgenommenes zweites Einzelbild 28b des Objekts 30 mit einem zweiten Glanzbereich 36b. Der zweite Glanzbereich 36b des zweiten Einzelbildes 28b ist einer zweiten Beleuchtungsrichtung 24b zugeordnet. Dabei hat die zweite Beleuchtungsrichtung 24b einen Azimutwinkel von 90° (ß = 90°). Ferner hat die zweite Beleuchtungsrichtung 24b einen innerhalb des Winkelbereichs von 0° bis 90° beliebig fest vorgegebenen Elevationswinkel (α = konstant).

Figur 2d zeigt ein aufgenommenes drittes Einzelbild 28c des Objekts 30 mit einem dritten Glanzbereich 36c. Der dritte Glanzbereich 36c des dritten Einzelbildes 28c ist einer dritten Beleuchtungsrichtung 24c zugeordnet. Dabei hat die dritte Beleuchtungsrichtung 24c einen Azimutwinkel von 180° (ß = 180°). Ferner hat die dritte Beleuchtungsrichtung 24c einen innerhalb des Winkelbereichs von 0° bis 90° beliebig fest vorgegebenen Elevationswinkel (α = konstant).

Figur 2c zeigt ein aufgenommenes viertes Einzelbild 28d des Objekts 30 mit einem vierten Glanzbereich 36d. Der vierte Glanzbereich 36d des vierten Einzelbildes 28d ist einer vierten Beleuchtungsrichtung 24d zugeordnet. Dabei hat die vierte Beleuchtungsrichtung 24d einen Azimutwinkel von 270° (ß = 270°). Ferner hat die vierte Beleuchtungsrichtung 24d einen innerhalb des Winkelbereichs von 0° bis 90° beliebig fest vorgegebenen Elevationswinkel (α = konstant).

In Figur 2a bis 2d entsprechen der erste bis vierte Glanzbereich 36a bis 36d jeweils einer Beleuchtung des Objekts 30 aus Norden, Osten, Süden bzw. Westen (ß = 0°, ..., 270°). Die Beleuchtung erfolgt dabei immer unter demselben Elevationswinkel (α = konstant). Ferner entsprechen die der ersten bis vierten Beleuchtungsrichtung 24a bis 24d zugeordneten Glanzbereiche 36a bis 36d jeweils einem überbelichteten Bereich des jeweiligen Einzelbildes 28a bis 28d. Insbesondere umfassen die Glanzbereiche 36a bis 36d Pixel, deren Intensität größer als ein vorbestimmter erster Schwellwert ist. Die Glanzbereiche 36a bis 36d entsprechen beispielsweise einer zweidimensionalen Verteilung von überbelichteten Pixeln mit Intensitäten oberhalb des vorbestimmten ersten Schwellwertes. Beispielsweise hat jeder Glanzbereich 36a bis 36d eine vorgegebene Anzahl von Pixeln in jeder Dimension der zweidimensionalen Verteilung. Die zweidimensionale Verteilung entspricht beispielsweise einem quadratischen oder kreisförmigen Bereich.

Figur 2e zeigt ein basierend auf der in Figur 2a bis 2d gezeigten ersten Sequenz von Einzelbildern 28a bis 28d erzeugtes, beispielhaftes kombiniertes Bild 34. Das in Figur 2e gezeigte kombinierte Bild 34 stellt ein Bild mit einer im Vergleich zu den Einzelbildern 28a bis 28d von Figur 2a bis 2d höheren Bildqualität dar. Insbesondere stellt das kombinierte Bild 34 von Figur 2e ein Bild des Objekts 30 dar, das keinen mit einem Bildinformationsverlust verbundenen Glanzbereich oder überbelichten Bereich umfasst. Beispielsweise ist die Intensität aller Pixel des kombinierten Bildes 34 maximal so groß wie der vorbestimmte erste Schwellwert.

Somit ist in Figur 2a bis 2d insbesondere die Oberfläche einer Metallkugel dargestellt, die aus vier verschiedenen Richtungen mit entsprechend unterschiedlichen Azimutwinkeln (ß = 0°, 90°,180°, 270°) mittels Segmenten von LEDs eines Ringlichts und einem konstanten Elevationswinkel (α = konstant) beleuchtet ist. Figur 2e zeigt das daraus errechnete kombinierte Bild 34. Es ist insbesondere zu erkennen, dass die Glanzbereiche 36a bis 36d bzw. die überbelichteten Bereiche aus Figur 2a bis 2d im Wesentlichen eliminiert werden können, wodurch der Informationsgehalt im kombinierten Bild 34 gesteigert wird.

Auch kann der mit einem Bildinformationsverlust verbundene unterbelichtete Bereich 59 aus Figur 2a im Wesentlichen eliminiert werden. Dies führt zu der im Vergleich zu den in Figur 2a bis 2d gezeigten Einzelbildern 28a bis 28d höheren Bildqualität des in Figur 2e gezeigten kombinierten Bildes 34. Somit kann der durch die bessere Erkennbarkeit von Objektdetails im kombinierten Bild 34 gekennzeichnete Bildinformationsgewinn erreicht werden.

Im Folgenden wird der "Pick and replace"-Algorithmus beispielhaft beschrieben, auf dessen Basis das in Figur 2e gezeigte kombinierte Bild 34 erhalten wird. Gemäß diesem beispielhaften Algorithmus wird beispielsweise der erste Glanzbereich 36a des in Figur 2a gezeigten ersten Einzelbildes 28a bestimmt. Dabei wird das erste Einzelbild 28a aus der in Figur 2a bis 2d gezeigten ersten Sequenz von Einzelbildern 28a bis 28d ausgewählt. Ferner wird der bestimmte, erste Glanzbereich 36a des ersten Einzelbildes 28a beispielsweise durch eine Bildinformation aus einem entsprechenden, nicht überbelichteten Bereich 38 des zweiten Einzelbildes 28b der ersten Sequenz von Einzelbildern 28a bis 28d ersetzt. Ferner kann der bestimmte, erste Glanzbereich 36a des ersten Einzelbildes 28a auch durch eine Bildinformation aus einem entsprechenden, nicht überbelichteten Bereich der anderen Einzelbilder 28c, 28d der ersten Sequenz von Einzelbildern 28a bis 28d ersetzt werden. Die insbesondere aus dem nicht überbelichteten Bereich 38 des zweiten Einzelbildes 28b abgeleitete Bildinformation entspricht Pixelintensitätswerten für die Ersetzung der Pixelintensitätswerte des ersten Glanzbereichs 36a des ersten Einzelbildes 28a.

Der nicht überbelichtete Bereich 38 des zweiten Einzelbildes 28b hat eine zweidimensionale Verteilung von Pixeln an einer bestimmten Stelle im zweiten Einzelbild 28b. Die Dimensionen und die Stelle der zweidimensionalen Verteilung von Pixeln des nicht überbelichteten Bereichs 38 im zweiten Einzelbild 28b entsprechen den Dimensionen und der Stelle der zweidimensionalen Verteilung von Pixeln des ersten Glanzbereichs 36a im ersten Einzelbild 28a. Ferner umfasst der nicht überbelichtete Bereich 38 des zweiten Einzelbildes 28b Pixel, deren Intensität maximal so groß wie der vorbestimmte erste Schwellwert ist.

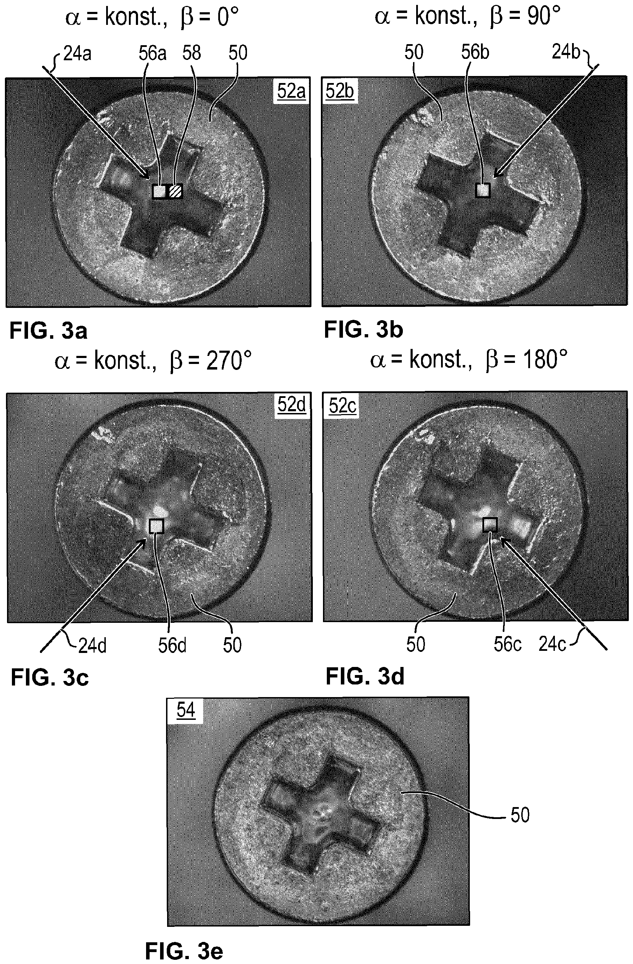

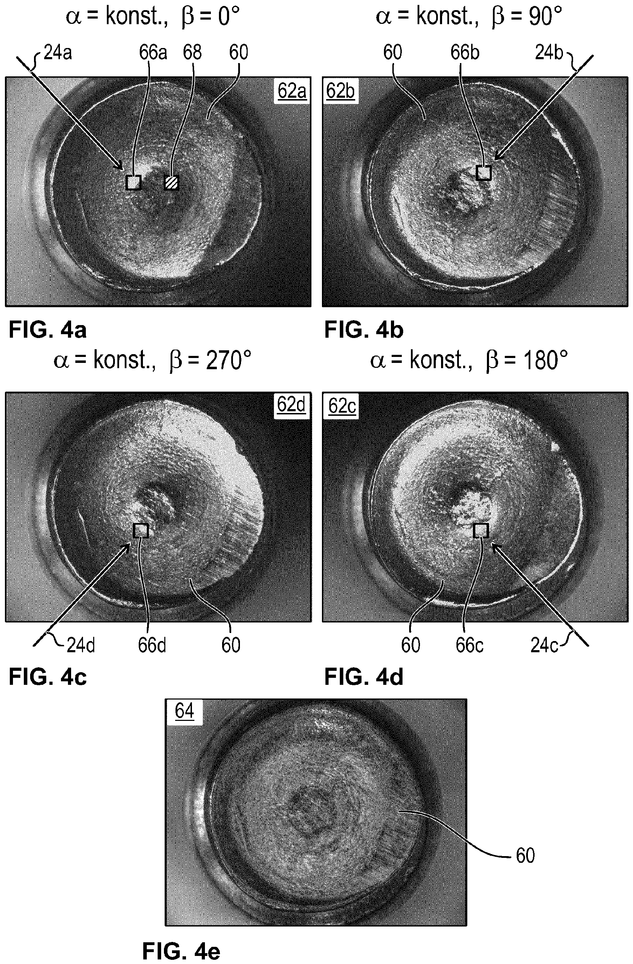

Figuren 3a bis 3d zeigen eine beispielhafte zweite Sequenz von vier zeitlich aufeinanderfolgenden Einzelbildern 52a bis 52d eines 3D-Objekts 50 mit einem ersten bis vierten Glanzbereich 56a bis 56d und einem unterbelichteten Bereich 58. Figuren 4a bis 4d zeigen eine beispielhafte dritte Sequenz von vier zeitlich aufeinanderfolgenden Einzelbildern 62a bis 62d eines 3D-Objekts 60 mit einem ersten bis vierten Glanzbereich 66a bis 66d und einem unterbelichteten Bereich 68. Das in Figur 3a bis 3d gezeigte 3D-Objekt 50 ist beispielsweise ein Schraubenkopf mit Schlitz mit einer unregelmäßigen, glänzenden Oberfläche. Ferner ist das in Figur 4a bis 4d gezeigte 3D-Objekt 60 beispielsweise das vordere Ende einer Schraube, welches keine zentrale Spitze aufweist, mit einer unregelmäßigen, glänzenden Oberfläche. Die in Figur 3a bis 3d gezeigten Glanzbereiche 56a bis 56d in den Einzelbildern 52a bis 52d der zweiten Sequenz sowie die in Figur 4a bis 4d gezeigten Glanzbereiche 66a bis 66d in den Einzelbildern 62a bis 62d der dritten Sequenz entsprechen hinsichtlich ihrer Zuordnung zur jeweiligen Beleuchtungsrichtung 24a bis 24d den in Figur 2a bis 2d gezeigten Glanzbereichen 36a bis 36d in den Einzelbildern 28a bis 28d der ersten Sequenz. Die Glanzbereiche 56a bis 56d bzw. 66a bis 66d stellen jedoch Bereiche mit Pixeln dar, deren Intensität weder oberhalb des vorbestimmten ersten Schwellwerts noch unterhalb eines vorbestimmten zweiten Schwellwerts liegt. Dabei ist der vorbestimmte zweite Schwellwert kleiner als der vorbestimmte erste Schwellwert. D.h., die Glanzbereiche 56a bis 56d bzw. 66a bis 66d umfassen weder überbelichtete Pixel noch unterbelichtete Pixel.

Ferner umfassen das in Figur 3a gezeigte erste Einzelbild 52a der zweiten Sequenz sowie das in Figur 4a gezeigte erste Einzelbild 62a der dritten Sequenz jeweils einen unterbelichteten Bereich 58 bzw. 68. Insbesondere umfasst der jeweilige unterbelichtete Bereich 58, 68 Pixel, deren Intensität kleiner als der vorbestimmte zweite Schwellwert ist. Die unterbelichteten Bereiche 58, 68 entsprechen beispielsweise einer zweidimensionalen Verteilung von unterbelichteten Pixeln mit Intensitäten unterhalb des vorbestimmten zweiten Schwellwertes. Somit stellen die Glanzbereiche 56a bis 56d bzw. 66a bis 66d relativ helle Bereiche dar, während die unterbelichteten Bereiche 58, 68 relativ dunkle Bereiche darstellen.

Figur 3e zeigt ein basierend auf der in Figur 3a bis 3d gezeigten zweiten Sequenz von Einzelbildern 52a bis 52d erzeugtes, beispielhaftes kombiniertes Bild 54. Figur 4e zeigt ein basierend auf der in Figur 4a bis 4d gezeigten dritten Sequenz von Einzelbildern 62a bis 62d erzeugtes, beispielhaftes kombiniertes Bild 64. Das in Figur 3e gezeigte kombinierte Bild 54 sowie das in Figur 4e gezeigte kombinierte Bild 64 stellen jeweils ein Bild mit einer im Vergleich zu den Einzelbildern 52a bis 52d von Figur 3a bis 3d bzw. 62a bis 62d von Figur 4a bis 4d höheren Bildqualität dar. Insbesondere stellt das kombinierte Bild 54 von Figur 3e bzw. das kombinierte Bild 64 von Figur 4e ein Bild des Objekts 50, 60 dar, das keinen mit einem Bildinformationsverlust verbundenen unterbelichteten Bereich umfasst. Beispielsweise ist die Intensität aller Pixel des kombinierten Bildes 54 bzw. 64 mindestens so groß wie der vorbestimmte zweite Schwellwert.

In Figur 3e bzw. 4e ist insbesondere zu erkennen, dass der jeweilige unterbelichtete Bereich 58, 68 aus Figur 3a bzw. 4a im Wesentlichen eliminiert werden kann. Dadurch wird der Informationsgehalt im kombinierten Bild 54, 64 gesteigert.

Bei der Aufnahme der in Figur 2a bis 2d, 3a bis 3d bzw. 4a bis 4d gezeigten ersten bis dritten Sequenz von Einzelbildern 28a bis 28d, 52a bis 52d und 62a bis 62d wurde jeweils die gleiche Fokuseinstellung verwendet. Insbesondere wurde bei der Aufnahme der ersten Sequenz jeweils auf die Oberfläche der Kugel 30 in der Mitte der Kugel 30 fokussiert. Ferner wurde bei der Aufnahme der zweiten Sequenz jeweils auf das obere Ende des Schraubenkopfes 50 fokussiert, während bei der Aufnahme der dritten Sequenz jeweils auf die Oberfläche des oberen Rands des vorderen Endes der Schraube 60 fokussiert wurde. Bei dieser Fokussierung liegen Teilbereiche, wie z.B. die von dem Schlitz des Schraubenkopfes 50 umfassten Bereiche, außerhalb des Schärfentiefebereichs. Wie anhand von Figur 3e verdeutlicht, enthält der entsprechende außerhalb des Schärfentiefebereichs liegende Teilbereich des kombinierten Bildes, wie z.B. das kombinierte Bild 54, dennoch mehr Objektdetails. Somit kann auch in dem außerhalb des Schärfentiefebereichs liegenden Teilbereich des kombinierten Bildes 34, 54, 64 ein Bildinformationsgewinn erzielt werden. Dieser Bildinformationsgewinn kann weiterhin ausgenutzt werden, um die Fokuseinstellung weiter zu verbessern.

Das in Figur 3e und 4e gezeigte kombinierte Bild 54, 64 wird unter Verwendung eines "Pick and replace"-Algorithmus erzeugt. Gemäß diesem beispielhaften Algorithmus wird der jeweilige unterbelichtete Bereich 58, 68 des in Figur 3a bzw. 4a gezeigten ersten Einzelbildes 52a, 62a bestimmt. Dabei wird das erste Einzelbild 52a aus der in Figur 3a bis 3d gezeigten zweiten Sequenz von Einzelbildern 52a bis 52d ausgewählt. Ferner wird das erste Einzelbild 62a aus der in Figur 4a bis 4d gezeigten dritten Sequenz von Einzelbildern 62a bis 62d ausgewählt. Beispielsweise wird der bestimmte, unterbelichtete Bereich 58, 68 des ersten Einzelbildes 52a, 62a durch eine Bildinformation aus einem entsprechenden Glanzbereich 56b, 66b des zweiten Einzelbildes 52b, 62b der zweiten bzw. dritten Sequenz von Einzelbildern 52a bis 52d, 62a bis 62d ersetzt. Dabei entspricht die aus dem Glanzbereich 56b, 66b des zweiten Einzelbildes 52b, 62b abgeleitete Bildinformation Pixelintensitätswerten für die Ersetzung der Pixelintensitätswerte des unterbelichteten Bereichs 58, 68 des ersten Einzelbildes 52a, 62a.

Vorzugsweise hat der Glanzbereich 56b, 66b des zweiten Einzelbildes 52b, 62b eine zweidimensionale Verteilung von Pixeln an einer bestimmten Stelle im zweiten Einzelbild 52b, 62b. Die Dimensionen und die Stelle der zweidimensionalen Verteilung von Pixeln des Glanzbereichs 56b, 66b im zweiten Einzelbild 52b, 62b entsprechen beispielsweise den Dimensionen und der Stelle der zweidimensionalen Verteilung von Pixeln des unterbelichteten Bereichs 58, 68 im ersten Einzelbild 52a, 62a.

Der anhand von Figur 2a bis 2e, 3a bis 3e bzw. 4a bis 4e beschriebene "Pick and replace"-Algorithmus wird mit Hilfe der Bildkombinationseinheit 32 durchgeführt.

Figur 5a zeigt ein Blockdiagramm von Komponenten des in Figur 1a gezeigten digitalen Mikroskops 10 mit einer Steuerung 40 und einer Beleuchtungseinrichtung 22. Wie in Figur 5b gezeigt, ist die Beleuchtungseinrichtung 22 mit der Steuerung 40 gekoppelt. Die Steuerung 40 dient zur Steuerung der Beleuchtungseinrichtung 22 unter Verwendung eines Steuersignals 42. Gemäß Figur 5a wird die Beleuchtungseinrichtung 22 mit Hilfe des Steuersignals 42 derart angesteuert, dass zwischen der ersten Beleuchtungsrichtung 24a und der zweiten Beleuchtungsrichtung 24b umgeschaltet wird. Somit kann eine Umschaltung zwischen der in Figur 1b gezeigten ersten und zweiten Beleuchtungsrichtung 24a, 24b automatisch durchgeführt werden.

Eine Variante der Bildaufnahme kann darin bestehen, kontinuierlich Bilder aufzunehmen und zusammenzusetzen und dabei manuell die Beleuchtungsrichtung, z.B. durch Änderung der Positionierung der Schwanenhalsbeleuchtungsvorrichtung, zu verändern. Alternativ kann die Umschaltung auch automatisch gesteuert verlaufen, z.B. durch Umschaltung an einer Bogenbeleuchtung.

Figur 5b zeigt ein Blockdiagramm von Komponenten des in Figur 1c gezeigten digitalen Mikroskops 10 mit einer Steuerung 40, einer ersten Beleuchtungseinrichtung 22a und einer zweiten Beleuchtungseinrichtung 22b. Wie in Figur 5b gezeigt, sind die erste und zweite Beleuchtungseinrichtung 22a, 22b mit der Steuerung 40 gekoppelt. Die Steuerung 40 dient zur Steuerung der ersten und zweiten Beleuchtungseinrichtung 22a, 22b unter Verwendung eines Steuersignals 42. Gemäß Figur 5b werden die erste und zweite Beleuchtungseinrichtung 22a, 22b mit Hilfe des Steuersignals 42 beispielsweise derart angesteuert, dass zwischen der ersten Beleuchtungsrichtung 24a und der zweiten Beleuchtungsrichtung 24b umgeschaltet wird. Somit kann eine Umschaltung zwischen der in Figur 1c gezeigten ersten und zweiten Beleuchtungsrichtung 24a, 24b automatisch durchgeführt werden.

Figur 5c zeigt ein Blockdiagramm von weiteren Komponenten des in Figur 1a gezeigten digitalen Mikroskops 10 mit einer Steuerung 40, einer Bildaufnahmeeinheit 26 und einer Bildkombinationseinheit 32. Wie in Figur 5c gezeigt, ist die Bildaufnahmeeinheit 26 mit der Steuerung 40 gekoppelt. Ferner ist die Bildkombinationseinheit 32 mit der Bildaufnahmeeinheit 26 gekoppelt. Die Steuerung 40 dient zur Steuerung der Bildaufnahmeeinheit 26 unter Verwendung eines Steuersignals 42. Die Bildaufnahmeeinheit 26 wird mit Hilfe des Steuersignals 42 derart angesteuert, dass die Einzelbilder 28a bis 28d, 52a bis 52d, 62a bis 62d der in Figur 2a bis 2d, 3a bis 3d bzw. 4a bis 4d gezeigten beispielhaften ersten bis dritten Sequenz mit einer konstanten Bildwiederholrate, d.h. fᵣ = konstant, aufgenommen werden. Die Einzelbilder 28a bis 28d, 52a bis 52d, 62a bis 62d der ersten bis dritten Sequenz werden mit Hilfe der Bildkombinationseinheit 32 unter Verwendung eines geeigneten Algorithmus derart kombiniert, dass das kombinierte Bild 34, 54, 64 mit der vergleichsweise hohen Bildqualität erhalten wird. Ferner kann unter Verwendung der konstanten Bildwiederholrate auch ein Live-Streaming 44 von mehreren kombinierten Bildern erzeugt werden.

Figur 6 zeigt ein Flussdiagramm eines mit dem in Figur 1a gezeigten digitalen Mikroskop 10 durchführbaren Verfahrens 100 gemäß einem Ausführungsbeispiel der vorliegenden Erfindung. Das Verfahren 100 dient zur Erzeugung des kombinierten Bildes 34, 54, 64 aus der ersten bis dritten Sequenz von Einzelbildern 28a bis 28d, 52a bis 52d, 62a bis 62d des Objekts 30, 50, 60. Wie in Figur 6 gezeigt, umfasst das Verfahren 100 ein Beleuchten 102 des Objekts 30, 50, 60 aus den mindestens zwei unterschiedlichen Beleuchtungsrichtungen 24a, 24b. Dabei ist beispielsweise der Elevationswinkel konstant, d.h. α = konstant, während der Azimutwinkel einer Beleuchtung des Objekts 30, 50, 60 aus Norden, Osten, Süden oder Westen, d.h. ß = 0°, 90°, 180° bzw. 270°, entspricht. Ferner umfasst das Verfahren 100 ein Aufnehmen 104 der ersten bis dritten Sequenz von Einzelbildern 28a bis 28d, 52a bis 52d, 62a bis 62d des aus den mindestens zwei unterschiedlichen Beleuchtungsrichtungen 24a, 24b beleuchteten Objekts 30, 50, 60 sowie ein Kombinieren 106 der Einzelbilder 28a bis 28d, 52a bis 52d, 62a bis 62d der ersten bis dritten Sequenz, um das kombinierte Bild 34, 54, 64 zu erhalten. Das Kombinieren 106 der Einzelbilder 28a bis 28d, 52a bis 52d, 62a bis 62d der ersten bis dritten Sequenz wird beispielsweise unter Verwendung des anhand von Figur 2a bis 2d, 3a bis 3d bzw. 4a bis 4d beschriebenen Algorithmus durchgeführt.

Die vorliegende Erfindung macht sich die Tatsache zu Nutze, dass die Beleuchtung in der Mikroskopie aktiv gestaltet und beeinflusst werden kann. Erfindungsgemäß sind unterschiedliche Beleuchtungsarten bzw. Beleuchtungsszenarien einstellbar. Im Folgenden werden einige Vorteile der vorliegenden Erfindung beschrieben.

Gemäß dem Stand der Technik gelingt das Einstellen einer optimalen Beleuchtung häufig nur für Teilbereiche des Bildfeldes, und nicht, wie wünschenswert, gleichzeitig über das gesamte Bildfeld. Eine wesentliche Verbesserung gegenüber dem Stand der Technik liegt erfindungsgemäß in der Kombination von Bildern, die mit unterschiedlichen Beleuchtungsszenarien aufgenommen werden. Beispielsweise werden hierbei Zonen (z.B. der in Figur 2b gezeigte Bereich 38) der Bilder 28a bis 28d zur Kombination herangezogen, die lokal den jeweils besten Bildeindruck liefern und nicht durch lokale Defizite, wie z.B. Reflexe, Unterbelichtung, Überbelichtung oder niedriger Kontrast, beeinträchtigt sind. Das Kombinieren der Bilder 28a bis 28d zu dem kombinierten Bild 34 kann beispielsweise durch den anhand von Figur 2a bis 2d beschriebenen "Pick and replace"-Algorithmus geschehen.

Es wurde erkannt, dass ein nennenswerter Unterschied zwischen einem herkömmlichen HDR-Algorithmus und dem erfindungsgemäßen "Pick and replace"-Algorithmus besteht. Ein herkömmlicher HDR-Algorithmus erwartet Bilddaten, bei welchen die aufgenommene Lichtmenge durch die Bildaufnahmeeinheit variiert wurde. Dadurch wird ein erweiterter Dynamikbereich (HDR) erfasst. Im Gegensatz dazu wird erfindungsgemäß die Beleuchtungsrichtung 24a, 24b, d.h. das Beleuchtungsszenario, variiert. Dadurch werden insbesondere Bildartefakte, wie z.B. unmittelbare Reflexe der LED-Lichtquelle auf der Probe bzw. dem Objekt, direkt vermieden. Dies erlaubt insbesondere bezüglich Reflexionen eine viel effizientere Erfassung gegenüber einer herkömmlichen HDR-Aufnahme.

Ausführungsbeispiele der vorliegenden Erfindung schaffen ein bildgebendes System für ein digitales Mikroskop 10, wobei das bildgebende System eine Beleuchtungseinrichtung 22, eine Bildaufnahmeeinheit 26 und eine Bildkombinationseinheit 32 mit einer Softwareeinheit umfasst. Die Beleuchtungseinrichtung 22 dient dazu, mindestens zwei Beleuchtungsszenarien zu erzeugen. Die Bildaufnahmeeinheit 26 dient zur Digitalisierung der zeitlich nacheinander, unter verschiedenen Beleuchtungsszenarien aufgenommenen Bilder 28a bis 28d, 52a bis 52d, 62a bis 62d. Die Softwareeinheit der Bildkombinationseinheit 32 dient dazu, aus den Einzelbildern 28a bis 28d, 52a bis 52d, 62a bis 62d ein synthetisches Bild, d.h. das kombinierte Bild 34, 54, 64, zu erzeugen.

Gemäß Ausführungsbeispielen unterscheiden sich die mindestens zwei Beleuchtungsszenarien in der Beleuchtungsrichtung bzw. Lichtrichtung, die von ihnen auf die Probe abgestrahlt wird. Der Algorithmus zur Erzeugung des synthetischen Bildes 34, 54, 64 kann beispielsweise ein Algorithmus sein, der einzelne Zonen der Einzelbilder 28a bis 28d, 52a bis 52d, 62a bis 62d zum synthetischen Bild 34, 54, 64 zusammenführt ("Pick and replace"-Algorithmus).

Gemäß Ausführungsbeispielen kann die Erzeugung eines Live-Streams 44 synthetischer Bilder ohne bzw. mit stark reduzierten über- oder unterbelichteten Bereichen mit konstanter Bildwiederholrate realisiert werden.

Ferner kann gemäß Ausführungsbeispielen eine Vorschau mit z.B. 3 × 3 synthetischen Bildern angezeigt werden, die mit Hilfe von verschiedenen Algorithmen bzw. Beleuchtungsszenarien erzeugt wurden. Diese Vorschau dient zur einfachen Selektion der am besten geeigneten Variante durch den Anwender.

Die vorliegende Erfindung ermöglicht das Erzeugen von Bildern ohne bzw. mit stark reduzierten unter- und überbelichteten Bereichen. Die dazu notwendigen Einzelbilder 28a bis 28d werden mit unterschiedlichen Beleuchtungsszenarien aufgenommen. Erfindungsgemäß sind folgende Variationen möglich. Es kann die azimutale Beleuchtungsrichtung, wie z.B. aus Nord, Süd, Ost, West, variiert werden. Ferner kann der Elevationswinkel für die Beleuchtung (z.B. koaxial, beinahe-vertikal, Schräglicht, streifendes Licht oder Dunkelfeldcharakteristik) variiert werden. Ferner kann der Typ der Lichtquelle, wie z.B. Punkt, Linie, Fläche, Ring, Ringsegment oder Diffus, ausgewählt werden. Darüber hinaus kann die Beleuchtungsapertur variabel eingestellt werden. Auch kann ein Mikroskop mit einem bildgebenden System zur Aufnahme von Farbbildern realisiert werden.

Gemäß Ausführungsbeispielen handelt es sich bei dem Mikroskop 10 um ein Digital-Mikroskop, welches keine Okulare aufweist. D.h., die Bilder werden ausschließlich auf einem (nicht gezeigten) Display angezeigt.

Gemäß Ausführungsbeispielen kann der Bildinformationsgewinn allein durch die Verwendung von unterschiedlichen Beleuchtungsrichtungen erfolgen, wobei jedoch die Lage des Fokus des Objektivs bzw. des abbildenden Systems, wie z.B. eine Zoomoptik, unverändert bleibt. Dies ist beispielsweise an den in Figur 2a bis 2d gezeigten unscharfen Bereichen der Kugel 30 am Rand der Bilder 28a bis 28d zu erkennen, die außerhalb des Schärfentiefebereichs der Abbildungsoptik liegen.

Zusätzlich kann eine solche Bildfolge noch für verschiedene Fokuslagen in Z-Richtung, d.h. in Richtung der optischen Achse, erfolgen, die dann nicht nur durch Variation der Beleuchtungssituation die Bilddetails erhöht, sondern auch ein Bild des Objekts (Kugel etc.) mit erweitertem Schärfentiefebereich erzielt, in dem die für jede erfindungsgemäß erzeugte Bildfolge (je Z-Position des Fokus beispielsweise vier Bilder mit verschiedenen Beleuchtungsrichtungen) als Z-Bildstapel zu einem voll tiefenscharfen Bild verrechnet werden.

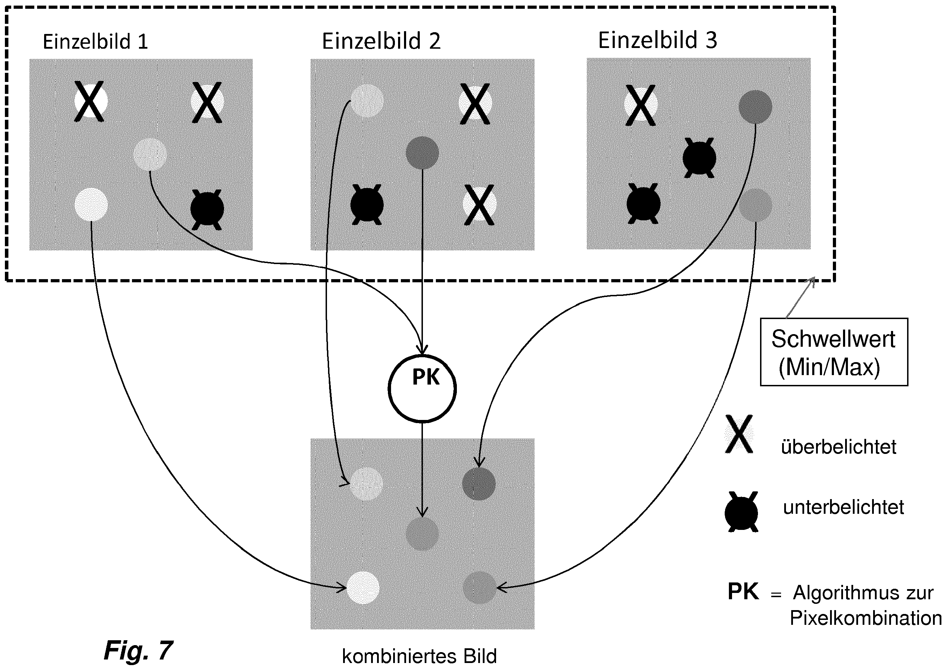

Figur 7 stellt in einer Schemadarstellung das Kombinationsprinzip zur Erzeugung eines kombinierten Bildes dar. Gezeigt ist eine Bildsequenz aus drei Einzelbildern, nämlich Einzelbild 1, Einzelbild 2 und Einzelbild 3. Diese wurden bei unveränderter Fokuslage jeweils in unterschiedlichen Beleuchtungssituationen an derselben Stelle einer Probe aufgenommen, wobei die Beleuchtungsrichtung von Einzelbild zu Einzelbild verändert wurde. Dadurch wurden jeweils gleiche Probenorte unterschiedlich beleuchtet und erscheinen unterschiedlich hell oder dunkel im jeweiligen Einzelbild.

In den drei Einzelbildern sind hell ausgeleuchtete Bereiche entstanden, die als unterschiedlich helle Kreise dargestellt sind. Überbelichtete Bereiche sind als helle Kreise dargestellt, die mit einem "X" durchgestrichen sind. Sie stellen ein Bildartefakt bzw. einen Bildartefakt-Bereich dar.

Auch schwächer ausgeleuchtete Bereiche wurden in den drei Bildern aufgenommen. Sie sind als unterschiedlich graue Kreise dargestellt. Unterbelichtete Bereiche sind als schwarze Kreise dargestellt, die mit einem "X" durchgestrichen sind. Sie stellen ebenfalls ein Bildartefakt bzw. einen Bildartefakt-Bereich dar.

Wie deutlich zu sehen ist, liegen die unterschiedlich stark ausgeleuchteten Bereiche aufgrund der unterschiedlichen Beleuchtungseinstellungen in den drei Einzelbilder der Bildsequenz jeweils an unterschiedlichen Stellen der Bilder:
Unten in der Mitte ist das Kombinationsbild gezeigt. Es entsteht, indem die Bildartefakte der drei Einzelbilder unter Ausnutzung der brauchbaren Bereiche der jerweils anderen Einzelbilder kompensiert werden.

Pfeile von den drei Einzelbildern 1, 2 und 3 zeigen an, welche Artefakt-Bereiche im kombinierten Bild durch Übernahme von Pixelbereichen aus einem der Einzelbilder kompensiert wurden. So sind die beiden oberen Bereiche im Einzelbild 1 jeweils Bildartefakt-Bereiche in Form von überbelichteten Bereichen und wurden durch entsprechende Bereiche aus den Einzelbildern 2 und 3 ersetzt. Der in der Mitte liegende Bereich im Einzelbild 1 war zu hell und wurde durch Pixelkombination, also mittels Verrechnung der Intensitäten mit einem Algorithmus zur Pixelkombination (in Fig. 7 als PK bezeichnet), durch Kombination der mittleren Bereiche aus den Einzelbildern 1 und 2 gewonnen.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

### Bezugszeichenliste

- 10: Mikroskop
- 12: Stativgrundkörper
- 14: Schwenkeinheit
- 16: Gehäuse
- 18: Objekttisch
- 20: Stellrad
- 22, 22a, 22b: Beleuchtungseinrichtung
- 24a bis 24d: Beleuchtungsrichtung
- 26: Bildaufnahmeeinheit
- 28b bis 28d, 52a bis 52d, 62a bis 62d: Einzelbilder
- 30, 50, 60: Objekt
- 32: Bildkombinationseinheit
- 34, 54, 64: kombiniertes Bild
- 36a bis 36d, 56a bis 56d, 66a bis 66d: Glanzbereich
- 38: Nicht überbelichteter Bereich
- 40: Steuerung
- 42: Steuerungssignal
- 44: Live-Stream
- 46, 48: Achse des Koordinatensystems
- 58, 59, 68: Unterbelichteter Bereich
- 102, 104, 106: Verfahrensschritt
- P: Punkt in Objektebene
- P1: Richtung

## Patentansprüche

1. Mikroskop (10), das ein kombiniertes Bild (34; 54; 64) aus mehreren Einzelbildern (28a bis 28d; 52a bis 52d; 62a bis 62d) eines Objekts (30; 50; 60) erzeugt,
mit mindestens einer Beleuchtungseinrichtung (22; 22a, 22b), die das Objekt (30; 50; 60) aus mindestens zwei unterschiedlichen Beleuchtungsrichtungen (24a, 24b) beleuchtet,
mit einer Bildaufnahmeeinheit (26), die mehrere Einzelbilder (28a bis 28d; 52a bis 52d; 62a bis 62d) des aus den mindestens zwei unterschiedlichen Beleuchtungsrichtungen (24a, 24b) beleuchteten Objekts (30; 50; 60) aufnimmt, und
mit einer Bildkombinationseinheit (32), welche die Einzelbilder (28a bis 28d; 52a bis 52d; 62a bis 62d) kombiniert und dadurch das kombinierte Bild (34; 54; 64) erzeugt,
wobei die Bildkombinationseinheit (32) dazu ausgebildet ist, bei der Kombination der Einzelbilder (28a bis 28d; 52a bis 52d; 62a bis 62d) einen Bildinformationsverlust, der mit einem Bildartefakt eines der Einzelbilder (28a bis 28d; 52a bis 52d; 62a bis 62d) verbunden ist, unter Verwendung einer Bildinformation mindestens eines anderen der Einzelbilder (28a bis 28d; 52a bis 52d; 62a bis 62d) im kombinierten Bild (34; 54; 64) zu kompensieren, **gekennzeichnet durch** eine Steuerung (40), welche die Bildaufnahmeeinheit (26) steuert und dazu ausgebildet ist, die Einzelbilder (28a bis 28d; 52a bis 52d; 62a bis 62d) mit einer konstanten Bildwiederholrate (fᵣ) aufzunehmen und somit ein Live-Streaming (44) von mehreren kombinierten Bildern zu erzeugen,
wobei die Beleuchtungseinrichtung (22) dazu ausgebildet ist, den Azimutwinkel (ß) und den Elevationswinkel (α) der mindestens zwei unterschiedlichen Beleuchtungsrichtungen (24a, 24b) einzustellen,
wobei die Bildaufnahmeeinheit (26) dazu ausgebildet ist, die Einzelbilder (28a bis 28d) als eine Sequenz von vier zeitlich aufeinander folgenden Einzelbildern (28a bis 28d) aufzunehmen, wobei die vier zeitlich aufeinander folgenden Einzelbilder (28a bis 28d) einen ersten bis vierten Glanzbereich (36a bis 36d) umfassen, und wobei der erste bis vierte Glanzbereich (36a bis 36d) einer ersten bis vierten Beleuchtungsrichtung (24a bis 24d) zugeordnet sind, und wobei die erste bis vierte Beleuchtungsrichtung (24a bis 24d) einen Azimutwinkel (ß) von 0°, 90°, 180° bzw. 270° und einen gleichen Elevationswinkel (α) haben, und
wobei die Beleuchtungseinrichtung (22) dazu ausgebildet ist, die erste bis vierte Beleuchtungsrichtung (24a bis 24d) unter Verwendung einer verstellbaren Aperturblende im Beleuchtungsstrahlengang des Mikroskops (10) zu erzeugen.

2. Mikroskop (10) nach Anspruch 1, **dadurch gekennzeichnet, dass** die Bildkombinationseinheit (32) dazu ausgebildet ist, ein Bildartefakt eines der Einzelbilder (28a bis 28d; 52a bis 52d; 62a bis 62d) aus einer automatisierten Auswertung der Einzelbilder (28a bis 28d; 52a bis 52d; 62a bis 62d)zu ermitteln.

3. Mikroskop (10) nach einem der Ansprüche 1 oder 2, **dadurch gekennzeichnet, dass** das Bildartefakt einen durch Überbelichtung entstandenen Glanzbereich (36a), einen unterbelichteten Bereich (58; 68) und/oder einen kontrastarmen Bereich umfasst, und dass die Bildkombinationseinheit (32) dazu ausgebildet ist, mindestens einen solchen Bildartefakt-Bereich zu ermitteln, indem sie einen Vergleich von Intensitätswerten der einzelnen Pixel der Einzelbilder (28a bis 28d; 52a bis 52d; 62a bis 62d) mit einem oberen Schwellwert und/oder einem unteren vorgegebenen Schwellwert vornimmt und/oder eine Kontrastbewertung der Bildbereiche vornimmt.

4. Mikroskop (10) nach Anspruch 3, **dadurch gekennzeichnet, dass** der Glanzbereich (36a bis 36d) jeweils mindestens einem überbelichteten Bereich des jeweiligen Einzelbildes (28a bis 28d) entspricht, wobei der Glanzbereich (36a bis 36d) solche Pixel umfasst, deren Intensität größer als ein vorbestimmter Schwellwert ist.

5. Mikroskop (10) nach Anspruch 3, **dadurch gekennzeichnet, dass** der unterbelichtete Bereich (58; 68) solche Pixel umfasst, deren Intensität kleiner als ein vorbestimmter Schwellwert ist.

6. Mikroskop (10) nach Anspruch 3, **dadurch gekennzeichnet, dass** der kontrastarme Bereich (58; 68) solche Pixel umfasst, deren Kontrastwert kleiner als ein vorbestimmter Kontrastwert ist.

7. Mikroskop (10) nach einem der Ansprüche 1 bis 3, **dadurch gekennzeichnet, dass** die Bildaufnahmeeinheit (26) dazu ausgebildet ist, die verschiedenen Einzelbilder (28a bis 28d) jeweils mit einem Glanzbereich (36a bis 36d) als Bildartefakt aufzunehmen und die jeweiligen Glanzbereiche (36a bis 36d) den mindestens zwei unterschiedlichen Beleuchtungsrichtungen (24a, 24b) zuzuordnen.

8. Mikroskop (10) nach einem der Ansprüche 1 bis 3, **dadurch gekennzeichnet, dass** die Bildkombinationseinheit (32) dazu ausgebildet ist, einen Glanzbereich (36a) als Artefakt eines ausgewählten Einzelbildes (28a) zu bestimmen und den bestimmten Glanzbereich (36a) des ausgewählten Einzelbildes (28a) durch eine Bildinformation aus einem entsprechenden, nicht überbelichteten Bereich (38) mindestens eines von dem ausgewählten Einzelbild (28a) verschiedenen Einzelbildes (28b) zu ersetzen, wobei der nicht überbelichtete Bereich (38) Pixel umfasst, deren Intensität maximal so groß wie ein vorbestimmter Schwellwert ist.

9. Mikroskop (10) nach einem der Ansprüche 1 bis 3, **dadurch gekennzeichnet, dass** die Bildkombinationseinheit (32) dazu ausgebildet ist, einen unterbelichteten Bereich (58; 68) als Artefakt eines ausgewählten Einzelbildes (52a; 62a) zu bestimmen und den bestimmten unterbelichteten Bereich (58; 68) des ausgewählten Einzelbildes (52a; 62a) durch eine Bildinformation aus einem entsprechenden, nicht unterbelichteten Bereich (56b; 66b) mindestens eines von dem ausgewählten Einzelbild (52a; 62a) verschiedenen Einzelbildes (52b; 62b) zu ersetzen, wobei der nicht unterbelichtete Bereich (56b; 66b) Pixel umfasst, deren Intensität mindestens so groß wie ein vorbestimmter Schwellwert ist.

10. Mikroskop (10) nach einem der Ansprüche 1 bis 9, **gekennzeichnet durch** eine Steuerung (40) zum Steuern der Beleuchtungseinrichtung (22), wobei die Steuerung (40) derart ausgebildet ist, dass zwischen einer ersten Beleuchtungsrichtung (24a) und einer zweiten Beleuchtungsrichtung (24b) der mindestens zwei unterschiedlichen Beleuchtungsrichtungen (24a, 24b) umgeschaltet wird.

11. Mikroskop (10) nach einem der Ansprüche 1 bis 10, **gekennzeichnet durch** eine einzige Beleuchtungseinrichtung (22) zum Beleuchten des Objekts (30; 50, 60) aus einer ersten Beleuchtungsrichtung (24a) und einer zweiten Beleuchtungsrichtung (24b) der mindestens zwei unterschiedlichen Beleuchtungsrichtungen (24a, 24b).

12. Verfahren (100) zum Erzeugen eines kombinierten Bildes (34; 54; 64) aus mehreren Einzelbildern (28a bis 28d; 52a bis 52d; 62a bis 62d) eines Objekts (30; 50; 60), mit den Schritten:
Beleuchten (102) des Objekts (30; 50; 60) aus mindestens zwei unterschiedlichen Beleuchtungsrichtungen (24a, 24b),
Aufnehmen (104) von mehreren Einzelbildern (28a bis 28d; 52a bis 52d; 62a bis 62d) des aus den mindestens zwei unterschiedlichen Beleuchtungsrichtungen (24a, 24b) beleuchteten Objekts (30; 50; 60), und
Erzeugen des kombinierten Bildes (34; 54; 64) durch Kombinieren (106) der Einzelbilder (28a bis 28d; 52a bis 52d; 62a bis 62d),
wobei beim Kombinieren (106) der Einzelbilder (28a bis 28d; 52a bis 52d; 62a bis 62d) ein Bildinformationsverlust, der mit einem Bildartefakt eines der Einzelbilder (28a bis 28d; 52a bis 52d; 62a bis 62d) verbunden ist, unter Verwendung einer Bildinformation mindestens eines anderen der Einzelbilder (28a bis 28d; 52a bis 52d; 62a bis 62d) im kombinierten Bild (34; 54; 64) kompensiert wird,
**gekennzeichnet durch** ein Steuern einer Bildaufnahmeeinheit (26), wobei die Einzelbilder (28a bis 28d; 52a bis 52d; 62a bis 62d) mit einer konstanten Bildwiederholrate (fᵣ) aufgenommen werden und somit ein Life-Streaming (44) von mehreren kombinierten Bildern erzeugt wird,
wobei der Azimutwinkel (β) und der Elevationswinkels (α) der mindestens zwei unterschiedlichen Beleuchtungsrichtungen (24a, 24b) eingestellt wird,
wobei die Einzelbilder (28a bis 28d) als eine Sequenz von vier zeitlich aufeinander folgenden Einzelbildern (28a bis 28d) aufgenommen werden, wobei die vier zeitlich aufeinander folgenden Einzelbilder (28a bis 28d) einen ersten bis vierten Glanzbereich (36a bis 36d) umfassen, und wobei der erste bis vierte Glanzbereich (36a bis 36d) einer ersten bis vierten Beleuchtungsrichtung (24a bis 24d) zugeordnet sind, und wobei die erste bis vierte Beleuchtungsrichtung (24a bis 24d) einen Azimutwinkel (ß) von 0°, 90°, 180° bzw. 270° und einen gleichen Elevationswinkel (α) haben, und
wobei die erste bis vierte Beleuchtungsrichtung (24a bis 24d) unter Verwendung einer verstellbaren Aperturblende im Beleuchtungsstrahlengang des Mikroskops (10) erzeugt werden.

13. Verfahren (100) nach Anspruch 12, **dadurch gekennzeichnet, dass** ein Glanzbereich (36a), ein unterbelichteter Bereich (58; 68) und/oder ein kontrastarmer Bereich als ein Bildartefakt-Bereich ermittelt wird, indem die Intensitätswerte der einzelnen Pixel der Einzelbilder (28a bis 28d; 52a bis 52d; 62a bis 62d) mit einem oberen Schwellwert und/oder einem unteren vorgegebenen Schwellwert verglichen werden und/oder eine Kontrastbewertung der Bereiche vorgenommen wird.

14. Verfahren (100) nach Anspruch 13, **dadurch gekennzeichnet, dass** die verschiedenen Einzelbilder (28a bis 28d) jeweils mit einem Glanzbereich (36a bis 36d) aufgenommen und die jeweiligen Glanzbereiche (36a bis 36d) den mindestens zwei unterschiedlichen Beleuchtungsrichtungen (24a, 24b) zugeordnet werden, wobei die den mindestens zwei unterschiedlichen Beleuchtungsrichtungen (24a, 24b) zugeordneten Glanzbereiche (36a bis 36d) jeweils einem überbelichteten Bereich des jeweiligen Einzelbildes (28a bis 28d) entsprechen.

15. Verfahren (100) nach Anspruch 14, **dadurch gekennzeichnet, dass** die Glanzbereiche (36a bis 36d) bestimmt werden, indem diejenigen Pixel ermittelt werden, deren Intensität größer als ein vorbestimmter Schwellwert ist.

16. Verfahren (100) nach einem der Ansprüche 12 bis 15, **dadurch gekennzeichnet, dass** zum Kombinieren (106) der Einzelbilder (28a bis 28d) ein Glanzbereich (36a) eines ausgewählten Einzelbildes (28a) bestimmt wird und durch eine Bildinformation ersetzt wird, die aus einem entsprechenden, nicht überbelichteten Bereich (38) mindestens eines von dem ausgewählten Einzelbild (28a) verschiedenen Einzelbildes (28b)gewonnen wird .

17. Verfahren (100) nach Anspruch 16, **dadurch gekennzeichnet, dass** der nicht überbelichtete Bereich (38) bestimmt wird, indem diejenigen Pixel ermittelt werden, deren Intensität maximal so groß wie ein vorbestimmter Schwellwert ist.

18. Verfahren (100) nach einem der Ansprüche 12 bis 16, **dadurch gekennzeichnet, dass** zum Kombinieren (106) der Einzelbilder (52a bis 52b; 62a bis 62d) ein unterbelichteter Bereich (58; 68) eines ausgewählten Einzelbildes (52a; 62a) bestimmt wird und der bestimmte unterbelichtete Bereich (58; 68) des ausgewählten Einzelbildes (52a; 62a) durch eine Bildinformation ersetzt wird, die aus einem entsprechenden, nicht unterbelichteten Bereich (56b; 66b) mindestens eines von dem ausgewählten Einzelbild (52a; 62a) verschiedenen Einzelbildes (52b; 62b)gewonnen wird, wobei der nicht unterbelichtete Bereich (56b; 66b) Pixel umfasst, deren Intensität mindestens so groß wie ein vorbestimmter Schwellwert ist.

19. Verfahren (100) nach einem der Ansprüche 12 bis 18, **gekennzeichnet durch** ein Steuern einer Beleuchtungseinrichtung (22), wobei zwischen einer ersten Beleuchtungsrichtung (24a) und einer zweiten Beleuchtungsrichtung (24b) der mindestens zwei unterschiedlichen Beleuchtungsrichtungen (24a, 24b) umgeschaltet wird.

## Claims

1. A microscope (10) that generates a combined image (34; 54; 64) from multiple individual images (28a to 28d; 52a to 52d; 62a to 62d) of an object (30; 50; 60), comprising
at least one illumination device (22; 22a, 22b) that illuminates the object (30; 50; 60) from at least two different illumination directions (24a, 24b),
an image acquisition unit (26) that acquires multiple individual images (28a to 28d; 52a to 52d; 62a to 62d) of the object (30; 50; 60) illuminated from the at least two different illumination directions (24a, 24b), and
an image combination unit (32) that combines the individual images (28a to 28d; 52a to 52d; 62a to 62d) and thereby generates the combined image (34; 54; 64), wherein the image combination unit (32) is configured to compensate, upon combination of the individual images (28a to 28d; 52a to 52d; 62a to 62d), for an image information loss connected with an image artifact of one of the individual images (28a to 28d; 52a to 52d; 62a to 62d), utilizing an image information of at least one other of the individual images (28a to 28d; 52a to 52d; 62a to 62d) in the combined image (34; 54; 64),
**characterized by** a control system (40) that controls the image acquisition unit (26) and is configured to acquire the individual images (28a to 28d; 52a to 52d; 62a to 62d) at a constant image refresh rate (fᵣ) and thus to generate a live stream (44) of multiple combined images, wherein the illumination device (22) is configured to adjust the azimuth angle (β) and the elevation angle (α) of the at least two different illumination directions (24a, 24b),
wherein the image acquisition unit (26) is configured to acquire the individual images (28a to 28d) as a sequence of four chronologically successive individual images (28a to 28d), the four chronologically successive individual images (28a to 28d) including a first to a fourth highlight region (36a to 36d), and the first to the fourth highlight regions (36a to 36d) being associated with a first to a fourth illumination direction (24a to 24d), and the first to the fourth illumination directions (24a to 24d) respectively having an azimuth angle (β) of 0°, 90°, 180° and 270° and an identical elevation angle (α), and
the illumination device (22) being configured to generate the first to the fourth illumination direction (24a to 24d) utilizing a displaceable aperture stop in the illumination beam path of the microscope (10).

2. The microscope (10) according to claim 1, **characterized in that** the image combination unit (32) is configured to ascertain an image artifact of one of the individual images (28a to 28d; 52a to 52d; 62a to 62d) from an automated evaluation of the individual images (28a to 28d; 52a to 52d; 62a to 62d).

3. The microscope (10) according to one of the claims 1 or 2, **characterized in that** the image artifact includes a highlight region (36a) created by overexposure, an underexposed region (58; 68) and/or a low-contrast region, and that the image combination unit (32) is configured to ascertain at least one such image artifact region by performing a comparison of intensity values of the individual pixels of the individual images (28a to 28d; 52a to 52d; 62a to 62d) with an upper threshold value and/or a lower predefined threshold value and/or by performing a contrast evaluation of the image regions.

4. The microscope (10) according to claim 3, **characterized in that** the highlight region (36a to 36d) corresponds respectively to at least an overexposed region of the respective individual image (28a to 28d), the highlight region (36a to 36d) including such pixels having an intensity greater than a predetermined threshold value.

5. The microscope (10) according to claim 3, **characterized in that** the underexposed region (58; 68) includes such pixels having an intensity less than a predetermined threshold value.

6. The microscope (10) according to claim 3, **characterized in that** the low-contrast region (58; 68) includes such pixels having a contrast value less than a predetermined contrast value.

7. The microscope (10) according to one of the claims 1 to 3, **characterized in that** the image acquisition unit (26) is configured to acquire the various individual images (28a to 28d) each having a highlight region (36a to 36d) as an image artifact, and to associate the respective highlight regions (36a to 36d) with the at least two different illumination directions (24a, 24b).

8. The microscope (10) according to one of the claims 1 to 3, **characterized in that** the image combination unit (32) is configured to identify a highlight region (36a) as an artifact of a selected individual image (28a) and to replace the identified highlight region (36a) of the selected individual image (28a) with an image information from a corresponding non-overexposed region (38) of at least one individual image (28b) different from the selected individual image (28a), the non-overexposed region (38) including pixels whose intensity is no greater than a predetermined threshold value.

9. The microscope (10) according to one of the claims 1 to 3, **characterized in that** the image combination unit (32) is configured to identify an underexposed region (58; 68) as an artifact of a selected individual image (52a; 62a) and to replace the identified underexposed region (58; 68) of the selected individual image (52a; 62a) with an image information from a corresponding non-underexposed region (56b; 66b) of at least one individual image (52b; 62b) different from the selected individual image (52a; 62a), the non-underexposed region (56b; 66b) including pixels whose intensity is at least as great as a predetermined threshold value.

10. The microscope (10) according to one of the claims 1 to 9, **characterized by** a control system (40) for controlling the illumination device (22), the control system (40) being configured such that a switchover occurs between a first illumination direction (24a) and a second illumination direction (24b) of the at last two different illumination directions (24a, 24b).

11. The microscope (10) according to one of the claims 1 to 10, **characterized by** a single illumination device (22) for illuminating the object (30; 50; 60) from a first illumination direction (24a) and from a second illumination direction (24b) of the at least two different illumination directions (24a, 24b).

12. A method (100) for generating a combined image (34; 54; 64) from multiple individual images (28a to 28d; 52a to 52d; 62a to 62d) of an object (30; 50; 60), comprising the steps:
illuminating (102) the object (30; 50; 60) from at least two different illumination directions (24a, 24b),
acquiring (104) multiple individual images (28a to 28d; 52a to 52d; 62a to 62d) of the object (30; 50; 60) illuminated from the at least two different illumination directions (24a; 24b), and
generating the combined image (34; 54; 64) by combining (106) the individual images (28a to 28d; 52a to 52d; 62a to 62d),
wherein, upon combining (106) the individual images (28a, to 28d; 52a to 52d; 62a to 62d), an image information loss associated with an image artifact of one of the individual images (28a to 28d; 52a to 52d; 62a to 62d) is compensated for utilizing an image information of at least one another of the individual images (28a to 28d; 52a to 52d; 62a to 62d) in the combined image,
**characterized by** controlling an image acquisition unit (26), wherein the individual images (28a to 28d; 52a to 52d; 62a to 62d) are acquired at a constant image refresh rate (fᵣ) and thus a live stream (44) of multiple combined images is generated,
the azimuth angle (β) and the elevation angle (α) of the at least two different illumination directions (24a, 24b) being set,
wherein the individual images (28a to 28d) are acquired as a sequence of four chronologically successive individual images (28a, to 28d), the four chronologically successive individual images (28a to 28d) including a first to a fourth highlight region (36a to 36d), and the first to fourth highlight region (36a to 36d) being associated with a first to a fourth illumination direction (24a to 24d), and the first to the fourth illumination directions (24a to 24d) respectively having an azimuth angle (β) of 0°, 90°, 180° and 270° and an identical elevation angle (α), and
the first to the fourth illumination direction (24a to 24d) being generated using a displaceable aperture stop in the illumination beam path of the microscope (10).

13. The method (100) according to claim 12, **characterized in that** a highlight region (36a), an underexposed region (58; 68) and/or a low-contrast region is ascertained as an image artifact region by comparing the intensity values of the individual pixels of the individual images (28a to 28d; 52a to 52d; 62a to 62d) with an upper threshold value and/or a lower predefined threshold value and/or by performing a contrast evaluation of the regions.

14. The method (100) according to claim 13, **characterized in that** the different individual images (28a to 28d) are acquired with a respective highlight region (36a to 36d) and the respective highlight regions (36a to 36d) are assigned to the at least two different illumination directions (24a, 24b), the highlight regions (36a to 36d) assigned to the at least two different illumination directions (24a, 24b) each corresponding to an overexposed region of the respective individual image (28a to 28d) .

15. The method (100) according to claim 14, **characterized in that** the highlight regions (36a to 36d) are identified **in that** such pixels are identified having an intensity greater than a predetermined threshold value.

16. The method (100) according to one of the claims 12 to 15, **characterized in that** for combining (106) the individual images (28a to 28d) a highlight region (36a) of a selected individual image (28a) is identified and replaced by an image information obtained from a corresponding non-overexposed region (38) of at least one individual image (28b) different from the selected individual image (28a).

17. The method (100) according to claim 16, **characterized in that** the non-overexposed region (38) is identified **in that** such pixels are ascertained whose intensity is no greater than a predetermined threshold value.

18. The method (100) according to one of the claims 12 to 16, **characterized in that** for combining (106) the individual images (52a to 52b; 62a to 62d) an underexposed region (58; 68) of a selected individual image (52a; 62a) is identified and the identified underexposed region (58; 68) of the selected individual image (52a; 62a) is replaced with an image information that is obtained from a corresponding non-underexposed region (56b; 66b) of at least an individual image (52b; 62b) different from the selected individual image (52a; 62a), the non-underexposed region (56b; 66b) comprising pixels whose intensity is at least as great as a predetermined threshold value.

19. The method (100) according to one of the claims 12 to 18, **characterized by** controlling an illumination device (22), wherein a switchover occurs between a first illumination direction (24a) and a second illumination direction (24b) of the at least two different illumination directions (24, 24b).

## Revendications

1. Microscope (10) générant une image combinée (34 ; 54 ; 64) à partir de plusieurs images individuelles (28a à 28d ; 52a à 52d ; 62a à 62d) d'un objet (30 ; 50 ; 60), comprenant
au moins un dispositif d'éclairage (22 ; 22a, 22b) qui éclaire l'objet (30 ; 50 ; 60) à partir d'au moins deux directions d'éclairage différentes (24a, 24b),
une unité de prise de vue (26) qui capture plusieurs images individuelles (28a à 28d ; 52a à 52d ; 62a à 62d) de l'objet (30 ; 50 ; 60) éclairé à partir des au moins deux directions d'éclairage différentes (24a, 24b), et
une unité de combinaison d'images (32) qui combine les images individuelles (28a à 28d ; 52a à 52d ; 62a à 62d) et génère ainsi l'image combinée (34 ; 54 ; 64), l'unité de combinaison d'images (32) étant réalisée pour compenser lors de la combinaison des images individuelles (28a à 28d ; 52a à 52d ; 62a à 62d) une perte d'informations d'image, qui est due à un artéfact d'image d'une des images individuelles (28a à 28d ; 52a à 52d ; 62a à 62d), en utilisant une information d'image d'au moins une autre des images individuelles (28a à 28d ; 52a à 52d ; 62a à 62d) sur l'image combinée (34 ; 54 ; 64),
**caractérisé par** un dispositif de commande (40) qui commande l'unité de prise de vue (26) et qui est réalisé pour capturer les images individuelles (28a à 28d ; 52a à 52d ; 62a à 62d) avec une fréquence de rafraîchissement constante (fᵣ) et générer ainsi une diffusion en direct (44) de plusieurs images combinées, le dispositif d'éclairage (22) étant réalisé pour régler l'angle azimutal (β) et l'angle d'élévation (α) des au moins deux directions d'éclairage différentes (24a, 24b),
l'unité de prise de vue (26) étant réalisée pour capturer les images individuelles (28a à 28d) sous la forme d'une séquence de quatre images individuelles (28a à 28) successives dans le temps, les quatre images individuelles (28a à 28) successives dans le temps comprenant une première à quatrième zone de brillance (36a à 36d), et les première à quatrième zones de brillance (36a à 36d) étant associées à une première à quatrième direction d'éclairage (24a à 24d), et les première à quatrième directions d'éclairage (24a à 24d) ayant un angle azimutal (β) de 0°, 90°, 180° ou 270° respectivement, et un même angle d'élévation (α), et
le dispositif d'éclairage (22) étant réalisé pour générer les première à quatrième directions d'éclairage (24a à 24d) en utilisant un diaphragme réglable sur la trajectoire des rayons d'éclairage du microscope (10).

2. Microscope (10) selon la revendication 1, **caractérisé en ce que** l'unité de combinaison d'images (32) est réalisée pour établir un artéfact d'image d'une des images individuelles (28a à 28d ; 52a à 52d ; 62a à 62d) à partir d'une évaluation automatisée des images individuelles (28a à 28d ; 52a à 52d ; 62a à 62d) .

3. Microscope (10) selon l'une quelconque des revendications 1 et 2, **caractérisé en ce que** l'artéfact d'image comprend une zone de brillance (36a) créée par une surexposition, une zone sous-exposée (58 ; 68), et/ou une zone à faible contraste, et **en ce que** l'unité de combinaison d'images (32) est réalisée pour établir au moins une de ces zones d'artéfact d'image en procédant à une comparaison des valeurs d'intensité des pixels individuels des images individuelles (28a à 28d ; 52a à 52d ; 62a à 62d) avec une valeur seuil supérieure et/ou une valeur seuil prédéfinie inférieure et/ou à une évaluation de contraste des zones d'image.

4. Microscope (10) selon la revendication 3, **caractérisé en ce que** la zone de brillance (36a à 36d) correspond respectivement à au moins une zone surexposée de l'image individuelle (28a à 28d) respective, la zone de brillance (36a à 36d) comprenant les pixels dont l'intensité est supérieure à une valeur seuil prédéterminée.

5. Microscope (10) selon la revendication 3, **caractérisé en ce que** la zone sous-exposée (58 ; 68) comprend les pixels dont l'intensité est inférieure à une valeur seuil prédéterminée.

6. Microscope (10) selon la revendication 3, **caractérisé en ce que** la zone à faible contraste (58 ; 68) comprend les pixels dont la valeur de contraste est inférieure à une valeur de contraste prédéterminée.

7. Microscope (10) selon l'une quelconque des revendications 1 à 3, **caractérisé en ce que** l'unité de prise de vue (26) est réalisée pour capturer les différentes images individuelles (28a à 28d) ayant respectivement une zone de brillance (36a à 36d) comme artéfact d'image, et pour attribuer les zones de brillance (36a à 36d) respectives auxdites au moins deux directions d'éclairage différentes (24a, 24b).

8. Microscope (10) selon l'une quelconque des revendications 1 à 3, **caractérisé en ce que** l'unité de combinaison d'images (32) est réalisée pour déterminer une zone de brillance (36a) comme artéfact d'une image individuelle sélectionnée (28a) et pour remplacer la zone de brillance (36a) déterminée de l'image individuelle sélectionnée (28a) par une information d'image provenant d'une zone correspondante non surexposée (38) d'au moins une image individuelle (28b) différente de l'image individuelle sélectionnée (28a), la zone non surexposée (38) comprenant des pixels dont l'intensité est au maximum égale à une valeur seuil prédéterminée.

9. Microscope (10) selon l'une quelconque des revendications 1 à 3, **caractérisé en ce que** l'unité de combinaison d'images (32) est réalisée pour déterminer une zone sous-exposée (58 ; 68) comme artéfact d'une image individuelle sélectionnée (52a ; 62a), et pour remplacer la zone sous-exposée (58 ; 68) déterminée de l'image individuelle sélectionnée 62a) par une information d'image provenant d'une zone correspondante, non sous-exposée (56b ; 66b) d'au moins une image individuelle (52b ; 62b) différente de l'image individuelle sélectionnée (52a ; 62a), la zone non sous-exposée (56b ; 66b) comprenant des pixels dont l'intensité est au moins égale à une valeur seuil prédéterminée.

10. Microscope (10) selon l'une quelconque des revendications 1 à 9, **caractérisé par** un dispositif de commande (40) pour commander le dispositif d'éclairage (22), le dispositif de commande (40) étant réalisé de telle sorte qu'une commutation entre une première direction d'éclairage (24a) et une deuxième direction d'éclairage (24b) des au moins deux directions d'éclairage différentes (24a, 24b) est réalisée.

11. Microscope (10) selon l'une quelconque des revendications 1 à 10, **caractérisé par** un seul dispositif d'éclairage (22) pour éclairer l'objet (30 ; 50, 60) à partir d'une première direction d'éclairage (24a) et d'une deuxième direction d'éclairage (24b) des au moins deux directions d'éclairage différentes (24a, 24b) .

12. Procédé (100) permettant de générer une image combinée (34 ; 54 ; 64) à partir de plusieurs images individuelles (28a à 28d ; 52a à 52d ; 62a à 62d) d'un objet (30 ; 50 ; 60), comprenant les étapes consistant à :
éclairer (102) l'objet (30 ; 50 ; 60) à partir d'au moins deux directions d'éclairage différentes (24a, 24b),
capturer (104) plusieurs images individuelles (28a à 28d ; 52a à 52d ; 62a à 62d) de l'objet (30 ; 50 ; 60) éclairé à partir des au moins deux directions d'éclairage différentes (24a, 24b), et
générer l'image combinée (34 ; 54 ; 64) en combinant (106) les images individuelles (28a à 28d ; 52a à 52d ; 62a à 62d),
dans lequel, lors de la combinaison (106) des images individuelles (28a à 28d ; 52a à 52d ; 62a à 62d), une perte d'informations d'image, due à un artéfact d'image d'une des images individuelles (28a à 28d ; 52a à 52d ; 62a à 62d), est compensée en utilisant une information d'image d'au moins une autre des images individuelles (28a à 28d ; 52a à 52d ; 62a à 62d) sur l'image combinée (34 ; 54 ; 64),
**caractérisé par** le fait de commander une unité de prise de vue (26), dans lequel les images individuelles (28a à 28d ; 52a à 52d ; 62a à 62d) sont capturées avec une fréquence de rafraîchissement constante (fᵣ) et une diffusion en direct (44) de plusieurs images combinées est ainsi générée,
dans lequel l'angle azimutal (β) et l'angle d'élévation (α) des au moins deux directions d'éclairage différentes (24a, 24b) sont réglés,
les images individuelles (28a à 28d) étant capturées sous la forme d'une séquence de quatre images individuelles (28a à 28d) successives dans le temps, les quatre images individuelles (28a à 28d) successives dans le temps comprenant une première à quatrième zone de brillance (36a à 36d), et les première à quatrième zones de brillance (36a à 36d) étant associées à une première à quatrième direction d'éclairage (24a à 24d), et les première à quatrième directions d'éclairage (24a à 24d) ayant un angle azimutal (β) de 0°, 90°, 180° ou 270° et un même angle d'élévation (α), et
les première à quatrième directions d'éclairage (24a à 24d) étant générées en utilisant un diaphragme réglable sur la trajectoire des rayons d'éclairage du microscope (10) .

13. Procédé (100) selon la revendication 12, **caractérisé en ce qu'**une zone de brillance (36a), une zone sous-exposée (58 ; 68) et/ou une zone à faible contraste sont établies comme zone d'artéfact d'image **en ce que** les valeurs d'intensité des pixels individuels des images individuelles (28a à 28d ; 52a à 52d ; 62a à 62d) sont comparées avec une valeur seuil supérieure et/ou une valeur seuil prédéfinie inférieure et/ou une évaluation de contraste des zones est effectuée.

14. Procédé (100) selon la revendication 13, **caractérisé en ce que** les différentes images individuelles (28a à 28d) sont respectivement capturées avec une zone de brillance (36a à 36d), et les zones de brillance (36a à 36d) respectives sont attribuées auxdites au moins deux directions d'éclairage différentes (24a, 24b), les zones de brillance (36a à 36d) attribuées auxdites au moins deux directions d'éclairage différentes (24a, 24b) correspondant respectivement à une zone surexposée de l'image individuelle (28a à 28d) respective.

15. Procédé (100) selon la revendication 14, **caractérisé en ce que** les zones de brillance (36a à 36d) sont déterminées **en ce que** sont établis ceux des pixels dont l'intensité est supérieure à une valeur seuil prédéterminée.

16. Procédé (100) selon l'une quelconque des revendications 12 à 15, **caractérisé en ce que** pour la combinaison (106) des images individuelles (28a à 28d), une zone de brillance (36a) d'une image individuelle sélectionnée (28a) est déterminée et remplacée par une information d'image qui est obtenue d'une zone correspondante non surexposée (38) d'au moins une image individuelle (28b) différente de l'image individuelle sélectionnée (28a).

17. Procédé (100) selon la revendication 16, **caractérisé en ce que** la zone non surexposée (38) est déterminée **en ce que** sont établis ceux des pixels dont l'intensité est au maximum égale à une valeur seuil prédéterminée.

18. Procédé (100) selon l'une quelconque des revendications 12 à 16, **caractérisé en ce que** pour la combinaison (106) des images individuelles (52a à 52b ; 62a à 62d), une zone sous-exposée (58 ; 68) d'une image individuelle sélectionnée 62a) est déterminée, et la zone sous-exposée déterminée (58 ; 68) de l'image individuelle sélectionnée (52a ; 62a) est remplacée par une information d'image qui est obtenue d'une zone correspondante non sous-exposée (56b ; 66b) d'au moins une image individuelle (52b ; 62b) différente de l'image individuelle sélectionnée (52a ; 62a), la zone non sous-exposée (56b ; 66b) comprenant des pixels dont l'intensité est au moins égale à une valeur seuil prédéterminée.

19. Procédé (100) selon l'une quelconque des revendications 12 à 18, **caractérisé par** le fait de commander un dispositif d'éclairage (22), dans lequel une commutation entre une première direction d'éclairage (24a) et une deuxième direction d'éclairage (24b) des au moins deux directions d'éclairage différentes (24a, 24b) est réalisée.
